# EUROPÄISCHE PATENTSCHRIFT

(11) **EP 2 513 123 B1**
(45) Veröffentlichungstag und Bekanntmachung des Hinweises auf die Patenterteilung: **04.03.2015**
(21) Anmeldenummer: 10785367.3
(22) Anmeldetag: 06.12.2010
(51) Int. Cl.: C07F 9/28, C07F 9/535, C07F 9/48, C07F 9/54, C07F 9/30, C07F 9/38

(54) **VERBINDUNGEN MIT (PERFLUORALKYL)FLUOROHYDROGENPHOSPHAT-ANIONEN**
COMPOUNDS WITH (PERFLUORALKYL)FLUORO-HYDROGENPHOSPHATE ANIONS
COMPOSÉS CONTENANT DES ANIONS DE (PERFLUORALKYL)FLUOROHYDROGÉNOPHOSPHATE

(30) Priorität: 18.12.2009 DE 102009058969
(43) Veröffentlichungstag der Anmeldung: 24.10.2012
(73) Patentinhaber: Merck Patent GmbH, 64293 Darmstadt (DE)
(72) Erfinder: IGNATYEV, Nikolai (Mykola), 47058 Duisburg (DE); SCHULTE, Michael, 65474 Bischofsheim (DE); BADER, Anne Julia, 33615 Bielefeld (DE); HOGE, Berthold Theo, 33604 Bielefeld (DE)
(86) Internationale Anmeldenummer: PCT/EP2010/007397
(87) Internationale Veröffentlichungsnummer: WO 2011/072810

(56) Entgegenhaltungen:
- EP-A1- 1 162 204
- EP-A2- 1 178 050
- WO-A1-03/002579
- WO-A1-03/087113
- DE-A1- 19 641 138
- NIXON AND J R SWAIN J F: "Direct oxidation of phosphines by the bifluoride ion", JOURNAL OF THE CHEMICAL SOCIETY, CHEMICAL COMMUNICATIONS, CHEMICAL SOCIETY. LETCHWORTH, GB, 1. Januar 1968 (1968-01-01), Seiten 997-998, XP009145519, ISSN: 0022-4936, DOI: DOI:10.1039/C19680000997 in der Anmeldung erwähnt
- N. V. IGNAT'EV ET AL.: "New ionic liquids with tris(perfluoroalkyl)trifluorophosphate (FAP) anions", J. FLUORINE CHEM., Bd. 126, 18. Juli 2005 (2005-07-18), Seiten 1150-1159, XP002628338,
- CAVELL R G ET AL: "The hydrotetrafluorotrifluoromethylphosphate anion: CF3PF4H-", PROCEEDINGS OF THE CHEMICAL SOCIETY, CHEMICAL SOCIETY, LONDON, 1. Juli 1964 (1964-07-01), Seite 229, XP009145517, ISSN: 0269-3135 in der Anmeldung erwähnt
- NIXON AND R G CAVELL J F: "Amine substitution and halogen exchange reactions of dihalogenotrifluoromethylphosphines", JOURNAL OF THE CHEMICAL SOCIETY, CHEMICAL SOCIETY, LETCHWORTH; GB, 1. Januar 1964 (1964-01-01), Seiten 5983-5990, XP009145518, ISSN: 0368-1769, DOI: DOI:10.1039/JR9640005983
- NIXON AND J R SWAIN J F: "Phosphorus fluorine compounds. Part XIX. Syntheses of, and nuclear magnetic resonance spectral studies on, hexaco-ordinate fluorophosphate anions containing phosphorus hydrogen bonds", JOURNALS OF THE CHEMICAL SOCIETY. A, INORGANIC, PHYSICAL AND THEORETICAL CHEMISTRY, CHEMICAL SOCIETY, UK, 1. Januar 1970 (1970-01-01), Seiten 2075-2080, XP009145516, ISSN: 0022-4944, DOI: DOI:10.1039/J19700002075 in der Anmeldung erwähnt

## Beschreibung

Die vorliegende Erfindung betrifft ein Verfahren zur Herstellung von Verbindungen mit (Perfluoralkyl)fluorohydrogenphosphat - Anion, sowie Verbindungen mit (Perfluoralkyl)fluorohydrogenphosphat - Anion und deren Verwendung.

Oniumsalze mit Perfluoralkylfluorophosphat-Anionen (FAP-Anionen) werden als ionische Flüssigkeiten und Leitsalze eingesetzt [EP 0929558 B1, WO 02/085919 A1, EP 1162204 A1].

Unter einer ionischen Flüssigkeit versteht man Salze, die in der Regel aus einem organischen Kation und einem anorganischen Anion bestehen. Sie enthalten keine neutralen Moleküle und weisen meistens Schmelzpunkte kleiner 373 K auf [Wasserscheid P, Keim W, 2000, Angew. Chem. 112: 3926].

Üblicherweise werden Oniumsalze mit organischem Kation und Perfluoralkylfluorophosphat-Anion (FAP-Anion) über eine Austauschreaktion eines wasserlöslichen Oniumsalzes mit z.B. Chlorid-, Bromid-, Tetrafluoroborat- oder Triflat-Anion und Perfluoralkylfluorophosphorsäure (HFAP) oder ihrer Alkalimetallsalze in Wasser [N. V. Ignatyev, U. Welz-Biermann, A. Kucheryna, G. Bissky, H. Willner, 2005, J. Fluorine Chem. 126: 1150-1159] hergestellt. HFAP [WO 03/002579] und seine Metallsalze können aus Tris(perfluoralkyl)-difluorophosphoranen hergestellt werden, welche durch elektrochemische Fluorierung (Simons Verfahren) von Trialkylphosphinen gewonnen werden können [N. V. Ignatyev, P. Sartori, 2000, J. Fluorine Chem. 103: 57-61; WO 00/21969]. Organische Salze mit FAP-Anion weisen gewöhnlich eine begrenzte Wasserlöslichkeit auf und können leicht von Nebenprodukten abgetrennt werden, die in der wässrigen Lösung verbleiben.

Ionische Flüssigkeiten mit FAP-Anion weisen eine hohe elektrochemische und thermische Stabilität und eine niedrige Viskosität auf. Anwendungsbereiche für diese ionischen Flüssigkeiten finden sich in der organischen Chemie (Lösungsmittel, Extraktionsmedien, etc.) und in den Materialwissenschaften (Wärmeträger, Gleitmittel, Leitsalze, etc.). Ionische Flüssigkeiten mit FAP-Anionen sind inerte Materialien, welche eine viel bessere hydrolytische Stabilität aufweisen als zum Beispiel ionische Flüssigkeiten mit PF₆⁻-Anionen. In manchen Fällen ist jedoch ein Medium wünschenswert, welches im Anschluss an das jeweilige Verfahren leicht wieder abgebaut werden kann.

Ziel der vorliegenden Erfindung war somit zum Einen die Bereitstellung eines neuen Verfahrens zur Herstellung von Verbindungen enthaltend (Perfluoralkyl)fluorohydrogenphosphat-Anionen. Ein weiteres Ziel der vorliegenden Erfindung war die Bereitstellung neuer Verbindungen enthaltend (Perfluoralkyl)fluorohydrogenphosphat-Anionen.

In WO 03/087113 wird ein Verfahren offenbart, das die Reduktion von (Perfluoralkyl)fluorophosphoranen ermöglicht. Überraschenderweise wurde nun ein Verfahren gefunden, das bei der Reaktion von (Perfluoralkyl)fluorophosphoran mit einem Hydridionen-Donator die Addition eines Hydridions an das Substrat ermöglicht, wobei ein (Perfluoralkyl)fluorohydrogenphosphat-Anion entsteht.

Ein erster Gegenstand der vorliegenden Erfindung ist somit ein Verfahren zur Herstellung einer Verbindung der Formel (1)

[Kt]^{x+}[(CₙF₂ₙ₊₁)_{z}PF_{5-z}H]⁻ₓ (1)

worin [Kt]^{x+} ein anorganisches oder organisches Kation ist,
wobei in einem Schritt eine Verbindung der Formel (2)

(CₙF₂ₙ₋₁)_{z}PF_{5-z} (2)

mit einem Hydridionen-Donator umgesetzt wird,
und wobei optional ein zweiter Schritt erfolgen kann falls [Kt]^{x+} ein organisches Kation ist, in dem das Produkt aus dem ersten Schritt mit einer Verbindung der Formel (3) umgesetzt wird

[Kt]^{x+}[X]⁻ₓ (3),

worin [Kt]^{x+} für ein organisches Kation und [X]⁻ für ein hydrophiles Anion stehen,
worin n = 1-8, x = 1-4 und z = 1-4 sind.

In der Literatur werden Bis(trifluormethyl)difluorohydrogenphosphat-([(CF₃)₂PF₃H]⁻) und Trifluormethyltrifluorohydrogenphosphat- ([CF₃PF₄H]⁻) Salze mit K⁺-Kation und [Me₂NH₂]⁺ -Kation beschrieben [J.F. Nixon, J.R. Swain, 1968, Chem. Comm.: 997-998; J.F. Nixon, J.R. Swain, 1970, J. Chem. Soc. A: Inorg. Phys. Theor.: 2075-2080; R.G. Cavell, J.F. Nixon, 1964, Proc. Chem. Soc.: 229]. K⁺ [(CF₃)₂PF₃H]⁻ und K⁺ [CF₃PF₄H]⁻ Salze werden *in situ* in einer Reaktion von Bis(trifluormethyl)fluoro-Phosphin ((CF₃)₂PF) oder Trifluormethyldifluoro-Phosphin (CF₃PF₂) mit Kaliumbifluorid in einem verschlossenen Reagenzglas bei 60 bis 100°C oder in Acetonitril-Lösung bei Raumtemperatur hergestellt. Die entsprechenden Salze mit [Me₂NH₂]⁺ -Kation werden durch die Reaktion von CF₃PF₂ bzw. (CF₃)₂PF mit Me₂NH gewonnen.

Diese Salze wurden lediglich mithilfe von ¹⁹F- und ¹H-NMR-spektroskopischen Messungen in der Reaktionsmischung untersucht. Für die Synthese von [(CF₃)₂PF₃H]⁻ und [CF₃PF₄H]⁻ -Salzen nach J.F. Nixon und J.R. Swain sind die beiden Ausgangsmaterialien Bis(trifluormethyl)-fluorophosphin (CF₃)₂PF und Trifluormethyldifluorophosphin CF₃PF₂ nötig, welche bei Raumtemperatur im gasförmigen Zustand vorliegen und stark luftempfindlich sind. Diese können in einem aufwendigen, mehrstufgen Syntheseverfahren hergestellt werden.

Erfindungsgemäß sind Hydridionen-Donatoren Verbindungen, die in der Lage sind, ein oder mehrere Hydridionen (H⁻) abzugeben. Im erfindungsgemäßen Verfahren ist der Hydridionen-Donator vorzugsweise ausgewählt aus der Gruppe umfassend Metallhydride, Borhydride, Hydridoborate und Hydridoaluminate, aber auch tertiäre und sekundäre Amine.

In einer besonders bevorzugten Ausführungsform werden Metallhydride eingesetzt; ganz besonders bevorzugt handelt es sich dabei um LiAlH₄.

In einer weiteren besonders bevorzugten Ausführungsform werden tertiäre oder sekundäre Amine der Formel (11) eingesetzt:

R¹⁴₂N-CH₂R¹⁵ (11),

wobei
R¹⁴ und R¹⁵ bei jedem Auftreten unabhängig voneinander
- H, wobei maximal ein Substituent R¹⁴ H sein darf,
- geradkettiges oder verzweigtes Alkyl mit 1-20 C-Atomen,
- geradkettiges oder verzweigtes Alkenyl mit 2-20 C-Atomen und einer oder mehreren Doppelbindungen,
- geradkettiges oder verzweigtes Alkinyl mit 2-20 C-Atomen und einer oder mehreren Dreifachbindungen,
- gesättigtes, teilweise oder vollständig ungesättigtes Cycloalkyl mit 3-7 C-Atomen, das mit Alkylgruppen mit 1-6 C-Atomen substituiert sein kann,
bedeutet,
wobei R¹⁵ auch Cl oder F sein kann,
wobei R¹⁵ vollständig mit Fluor und/ oder ein oder mehrere R¹⁴ und/oder R¹⁵ teilweise mit Halogenen oder teilweise mit -OR^{1*}, -NR^{1*}₂, -CN, -C(O)NR^{1*}₂ oder -SO₂NR^{1*}₂ substituiert sein können,
und wobei ein oder zwei nicht benachbarte und nicht α-ständige Kohlenstoffatome der Reste R¹⁴ und/oder R¹⁵ durch Atome und/ oder Atomgruppierungen ausgewählt aus der Gruppe -O-, -S-, -S(O)-, -SO₂-, -N⁺R^{1*}₂-, -C(O)NR^{1*}-, -SO₂NR^{1*}- oder -P(O)R^{1*}- ersetzt sein können;
worin R^{1*} für nicht oder teilweise fluoriertes C₁- bis C₆-Alkyl, C₃- bis C₇-Cycloalkyl, unsubstituiertes oder substituiertes Phenyl steht.

Der nach dem erfindungsgemäßen Verfahren zum Einsatz kommende Hydridionen-Donator kann entweder im Überschuss oder in äquimolarer Menge, jeweils bezogen auf die eingesetzte Menge an (Perfluoralkyl)fluorophosphoranen, eingesetzt werden. Vorzugsweise wird der Hydridionen-Donator in äquimolarer Menge eingesetzt.

Die Herstellung von (Perfluoralkyl)fluorophosphoranen gemäß Formel (2) kann nach üblichen, dem Fachmann bekannten Methoden erfolgen. Vorzugsweise werden diese Verbindungen durch elektrochemische Fluorierung geeigneter Ausgangsverbindungen hergestellt [V.Y. Semenii et al., 1985, Zh. Obshch. Khim. 55 (12): 2716-2720; N. V. Ignatyev, P. Sartori, 2000, J. Fluorine Chem. 103: 57-61; WO 00/21969].

In der Verbindung der Formel (2) steht z bevorzugt für 2 oder 3; das bedeutet, dass Formel (2) bevorzugt ausgewählt ist aus der Gruppe umfassend (CₙF₂ₙ₊₁)₃PF2 und (CₙF₂ₙ₊₁)₂PF₃. Besonders bevorzugt ist z=3.

Ebenfalls bevorzugt steht in den Verbindungen der Formel (2) n für 2, 3 oder 4, besonders bevorzugt für 2 oder 4. Ganz besonders bevorzugt steht n für 2, das bedeutet, dass eine Verbindung der Formel (2) ganz besonders bevorzugt (C₂F₅)_{z}PF_{5-z} ist.

Somit handelt es sich bei den Verbindungen der Formel (2) ganz besonders bevorzugt um (C₂F₅)₃PF₂.

Bei dem Kation [Kt]^{x+} in Formel (1) des erfindungsgemäßen Verfahrens kann es sich sowohl um ein anorganisches als auch um ein organisches Kation handeln.

Sofern ein anorganisches Kation vorliegt, ist dies bevorzugt ein Metallkation. Besonders bevorzugt handelt es sich bei dem Metallkation um ein Alkalimetallkation, vorzugsweise um ein Lithium-, Natrium- oder KaliumKation.

Handelt es sich bei [Kt]^{x+} in Formel (1) um ein organisches Kation, so ist dieses genau wie [Kt]^{x+} in Formel (3) bevorzugt ausgewählt aus der Gruppe umfassend Ammonium-, Phosphonium-, Uronium-, Thiouronium-, Sulfonium-, Oxonium-, Guanidiniumkationen, heterocyclische Kationen und Iminium-Kationen, wie sie im folgenden definiert sind:
Ammoniumkationen sind durch die allgemeine Formel (4)

   [NR₄]⁺ (4)
gegeben, wobei
R jeweils unabhängig voneinander
- H,
- geradkettiges oder verzweigtes Alkyl mit 1-20 C-Atomen,
- geradkettiges oder verzweigtes Alkenyl mit 2-20 C-Atomen und einer oder mehreren Doppelbindungen,
- geradkettiges oder verzweigtes Alkinyl mit 2-20 C-Atomen und einer oder mehreren Dreifachbindungen,
- gesättigtes, teilweise oder vollständig ungesättigtes Cycloalkyl mit 3-7 C-Atomen, das mit Alkylgruppen mit 1-6 C-Atomen substituiert sein kann,
bedeutet,
wobei ein R vollständig mit Fluor und/ oder ein oder mehrere R teilweise mit Halogenen, insbesondere -F und/oder Cl, oder teilweise mit -OR¹, -NR^{1*}₂, -CN, -C(O)NR¹₂ oder -SO₂NR¹₂ substituiert sein können,
und wobei ein oder zwei nicht benachbarte und nicht α-ständige Kohlenstoffatome des Restes R durch Atome und/ oder Atomgruppierungen ausgewählt aus der Gruppe -O-, -S-, -S(O)-, -SO₂-, -N⁺R¹₂-, -C(O)NR¹-, -SO₂NR¹- oder -P(O)R¹- ersetzt sein können.

Phosphoniumkationen sind durch die allgemeine Formel (5)

[PR²₄]⁺ (5)

gegeben, wobei
R² jeweils unabhängig voneinander
- H wobei nicht alle Substituenten R² gleichzeitig H sein dürfen, NR¹₂,
- geradkettiges oder verzweigtes Alkyl mit 1-20 C-Atomen,
- geradkettiges oder verzweigtes Alkenyl mit 2-20 C-Atomen und einer oder mehreren Doppelbindungen,
- geradkettiges oder verzweigtes Alkinyl mit 2-20 C-Atomen und einer oder mehreren Dreifachbindungen,
- gesättigtes, teilweise oder vollständig ungesättigtes Cycloalkyl mit 3-7 C-Atomen, das mit Alkylgruppen mit 1-6 C-Atomen substituiert sein kann,
bedeutet,
wobei ein R² vollständig mit Fluor und/oder ein oder mehrere R² teilweise mit Halogenen, insbesondere -F und/ oder -Cl, oder teilweise mit -OR¹, -CN, -C(O)NR¹₂ oder -SO₂NR¹₂ substituiert sein können,
und wobei ein oder zwei nicht benachbarte und nicht α-ständige Kohlenstoffatome des R², durch Atome und/ oder Atomgruppierungen ausgewählt aus der Gruppe -O-, -S-, -S(O)-, -SO₂-, -N⁺R¹₂-, -C(O)NR¹-, -SO₂NR¹-, oder -P(O)R¹- ersetzt sein können.

Ausgeschlossen sind deshalb Kationen der Formeln (4) und (5), in denen alle vier oder drei Substituenten R und R² vollständig mit Halogenen substituiert sind, beispielsweise das Tris(trifluormethyl)methylammoniumkation, das Tetra(trifluormethyl)ammoniumkation oder das Tetra(nonafluorbutyl)ammoniumkation.

Uroniumkationen sind durch die allgemeine Formel (6)

[C(NR³R⁴)(OR⁵)(NR⁶R⁷)]⁺ (6)

und geeignete Thiouroniumkationen durch die Formel (7),

[C(NR³R⁴)(SR⁵)(NR⁶R⁷)]⁺ (7),

gegeben, wobei
R³ bis R⁷ jeweils unabhängig voneinander
- H, NR^{1*}₂,
- geradkettiges oder verzweigtes Alkyl mit 1 bis 20 C-Atomen,
- geradkettiges oder verzweigtes Alkenyl mit 2-20 C-Atomen und einer oder mehreren Doppelbindungen,
- geradkettiges oder verzweigtes Alkinyl mit 2-20 C-Atomen und einer oder mehreren Dreifachbindungen,
- gesättigtes, teilweise oder vollständig ungesättigtes Cycloalkyl mit 3-7 C-Atomen, das mit Alkylgruppen mit 1-6 C-Atomen substituiert sein kann,
bedeuten,
wobei ein oder mehrere der Substituenten R³ bis R⁷ teilweise mit Halogenen, insbesondere -F, oder mit -OH, -OR¹, -CN, -C(O)NR¹₂ oder-SO₂NR¹₂ substituiert sein können,
und wobei ein oder zwei nicht benachbarte und nicht α-ständige Kohlenstoffatome von R³ bis R⁷ durch Atome und/ oder Atomgruppierungen ausgewählt aus der Gruppe -O-, -S-, -S(O)-, -SO₂-, -N⁺R¹₂-, -C(O)NR¹-, - SO₂NR¹-, oder -P(O)R¹- ersetzt sein können.

Sulfoniumkationen sind durch die allgemeine Formel (12)

[(R°)₃S]⁺ (12)

gegeben, wobei
R° steht für
- NR"'₂,
- geradkettiges oder verzweigtes Alkyl mit 1-8 C-Atomen,
- gesättigtes, teilweise oder vollständig ungesättigtes Cycloalkyl mit 3-7 C-Atomen, das mit Alkylgruppen mit 1-6 C-Atomen substituiert sein kann,
wobei ein oder mehrere der Substituenten R⁰ teilweise mit Halogenen, insbesondere -F, oder mit -OR"', -CN oder -N(R''')₂ substituiert sein können.

Oxoniumkationen sind durch die allgemeine Formel (13)

[(R°*)₃O]⁺ (13)

gegeben, wobei
R°* steht für
- geradkettiges oder verzweigtes Alkyl mit 1-8 C-Atomen,
- gesättigtes, teilweise oder vollständig ungesättigtes Cycloalkyl mit 3-7 C-Atomen, das mit Alkylgruppen mit 1-6 C-Atomen substituiert sein kann,
wobei ein oder mehrere der Substituenten R^{0*} teilweise mit Halogenen, insbesondere -F, oder mit -OR"', -CN oder -N(R^{'''})₂ substituiert sein können, worin R'" unabhängig voneinander steht für ein geradkettiges oder verzweigtes C₁-C₈-Alkyl.

R° und R°* stehen hier bevorzugt für ein geradkettiges Alkyl mit 1-8 C-Atomen, unsubstituiertes Phenyl oder mit C₁-C₆-Alkyl, OR"', N(R''')₂, CN oder F substituiertes Phenyl.

R'" steht bevorzugt für ein geradkettiges Alkyl mit 1-8 C Atomen, insbesondere Methyl oder Ethyl.

Guanidiniumkationen sind durch die allgemeine Formel (8)

[C(NR⁸R⁹)(NR¹⁰R¹¹)(NR¹²R¹³)]⁺ (8)

gegeben, wobei
R⁸ bis R¹³ jeweils unabhängig voneinander
- H, NR^{1*}₂,
- geradkettiges oder verzweigtes Alkyl mit 1 bis 20 C-Atomen,
- geradkettiges oder verzweigtes Alkenyl mit 2-20 C-Atomen und einer oder mehreren Doppelbindungen,
- geradkettiges oder verzweigtes Alkinyl mit 2-20 C-Atomen und einer oder mehreren Dreifachbindungen,
- gesättigtes, teilweise oder vollständig ungesättigtes Cycloalkyl mit 3-7 C-Atomen, das mit Alkylgruppen mit 1-6 C-Atomen substituiert sein kann,
bedeuten,
wobei ein oder mehrere der Substituenten R⁸ bis R¹³ teilweise mit Halogenen, insbesondere -F, oder mit -OR¹, -CN, -C(O)NR¹₂ oder -SO₂NR¹₂ substituiert sein können,
und wobei ein oder zwei nicht benachbarte und nicht α-ständige Kohlenstoffatome von R⁸ bis R¹³ durch Atome und/oder Atomgruppierungen ausgewählt aus der Gruppe -O-, -S-, -S(O)-, -SO₂-, -N⁺R¹₂-, -C(O)NR¹-,-SO₂NR¹-, oder -P(O)R¹- ersetzt sein können.

Heterozyklische Kationen sind durch die allgemeine Formel (9)

[HetN]⁺ (9)

gegeben,
wobei [HetN]⁺ ein heterocyclisches Kation ist, ausgewählt aus der Gruppe umfassend 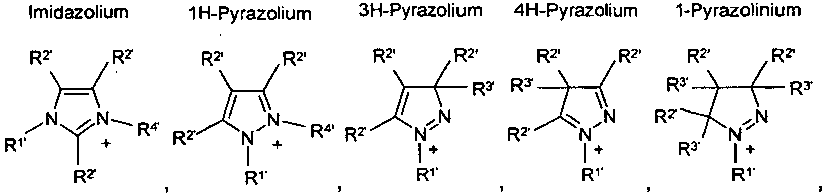 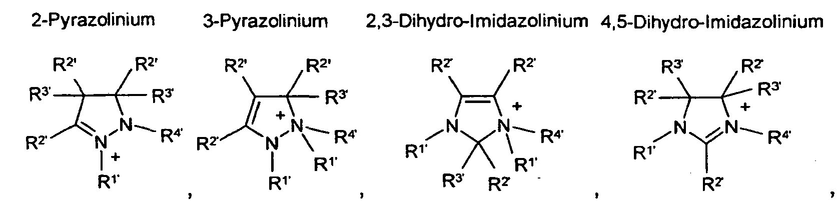 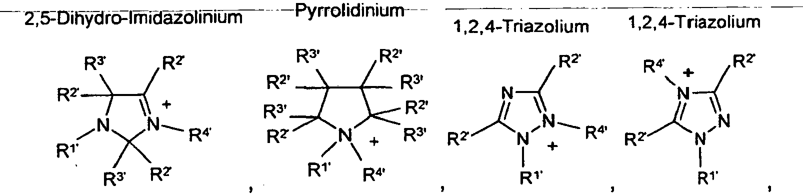 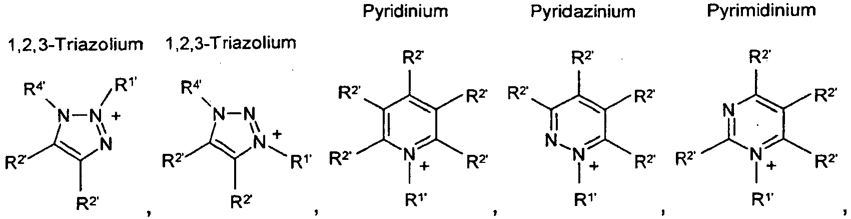 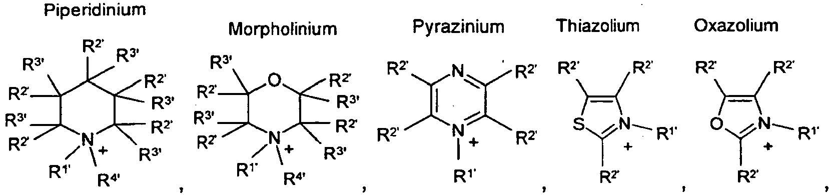 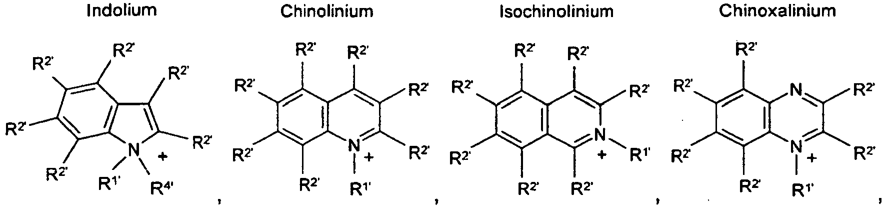 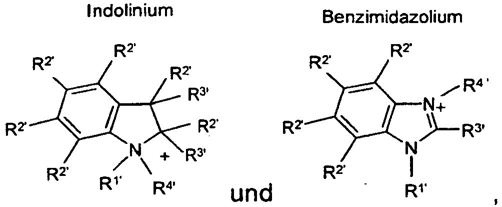 wobei die Substituenten R^{1'} bis R^{4'} jeweils unabhängig voneinander
- H,
- geradkettiges oder verzweigtes Alkyl mit 1-20 C-Atomen,
- geradkettiges oder verzweigtes Alkenyl mit 2-20 C-Atomen und einer oder mehreren Doppelbindungen,
- geradkettiges oder verzweigtes Alkinyl mit 2-20 C-Atomen und einer oder mehreren Dreifachbindungen,
- gesättigtes, teilweise oder vollständig ungesättigtes Cycloalkyl mit 3-7 C-Atomen, das mit Alkylgruppen mit 1-6 C-Atomen substituiert sein kann,
- gesättigtes, teilweise oder vollständig ungesättigtes Heteroaryl, Heteroaryl-C₁-C₆-alkyl oder Aryl-C₁-C₆-alkyl,
bedeuten,
wobei die Substituenten R^{1'}, R^{2'}, R^{3'} und/oder R^{4'} zusammen ein Ringsystem bilden können,
wobei ein oder mehrere Substituenten R^{1'} bis R^{4'} teilweise oder vollständig mit Halogenen, insbesondere -F und/oder -Cl, oder teilweise mit -OR¹, -CN, -C(O)NR¹₂ oder -SO₂NR¹₂ substituiert sein können, wobei jedoch nicht gleichzeitig R^{1'} und R^{4'} vollständig mit Halogenen substituiert sein dürfen, und wobei ein oder zwei nicht benachbarte und nicht am Heteroatom gebundene Kohlenstoffatome der Substituenten R^{1'} bis R^{4'}, durch Atome und/oder Atomgruppierungen ausgewählt aus der Gruppe -O-, -S-, -S(O)-,-SO₂-, -N⁺R¹₂-, -C(O)NR¹-, -SO₂NR¹-, oder -P(O)R¹- ersetzt sein können.

Iminiumkationen sind durch die allgemeine Formel (10)

[R¹⁴₂N=CHR¹⁵]⁺ (10)

gegeben sind, wobei
R¹⁴ und R¹⁵ bei jedem Auftreten unabhängig voneinander
- H, wobei maximal ein Substituent R¹⁴ H sein darf,
- geradkettiges oder verzweigtes Alkyl mit 1-20 C-Atomen,
- geradkettiges oder verzweigtes Alkenyl mit 2-20 C-Atomen und einer oder mehreren Doppelbindungen,
- geradkettiges oder verzweigtes Alkinyl mit 2-20 C-Atomen und einer oder mehreren Dreifachbindungen,
- gesättigtes, teilweise oder vollständig ungesättigtes Cycloalkyl mit 3-7 C-Atomen, das mit Alkylgruppen mit 1-6 C-Atomen substituiert sein kann,
bedeutet,
wobei R¹⁵ auch für Cl oder F stehen kann,
wobei R¹⁵ vollständig mit Fluor und/ oder ein oder mehrere R¹⁴ und/oder R¹⁵ teilweise mit Halogenen oder teilweise mit -OR^{1*}, -NR^{1*}₂, -CN, -C(O)NR^{1*}₂ oder -SO₂NR^{1*}₂ substituiert sein können,
und wobei ein oder zwei nicht benachbarte und nicht α-ständige Kohlenstoffatome des Restes R¹⁴ und/oder R¹⁵ durch Atome und/ oder Atomgruppierungen ausgewählt aus der Gruppe -O-, -S-, -S(O)-, -SO₂-,-N⁺R^{1*}₂-, -C(O)NR^{1*}-, -SO₂NR^{1*}- oder -P(O)R^{1*}- ersetzt sein können;

R¹ steht in allen oben genannten Definitionen für H, nicht oder teilweise fluoriertes C₁- bis C₆-Alkyl, C₃- bis C₇-Cycloalkyl, unsubstituiertes oder substituiertes Phenyl und R^{1*} für nicht oder teilweise fluoriertes C₁- bis C₆-Alkyl, C₃- bis C₇-Cycloalkyl, unsubstituiertes oder substituiertes Phenyl.

Unter vollständig ungesättigten Cycloalkyl-Substituenten werden im Sinne der vorliegenden Erfindung auch aromatische Substituenten verstanden.

Als Substituenten R und R² bis R¹³ der Verbindungen der Formeln (4) bis (8) kommen erfindungsgemäß dabei neben H bevorzugt in Frage: C₁- bis C₂₀-, insbesondere C₁- bis C₁₄-Alkylgruppen, und gesättigte oder ungesättigte, d.h. auch Phenyl, C₃- bis C₇-Cycloalkylgruppen, die mit C₁- bis C₆-Alkylgruppen substituiert sein können, insbesondere Phenyl.

Die Substituenten R und R² in den Verbindungen der Formel (4) oder (5) können dabei gleich oder verschieden sein. Bevorzugt sind bei Verbindungen der Formeln (4) drei oder vier Substituenten R gleich. Bei Verbindungen der Formeln (5) handelt es sich bevorzugt um verschiedene Substituenten R².

Die Substituenten R und R² sind insbesondere bevorzugt Methyl, Ethyl, Isopropyl, Propyl, Butyl, sek.-Butyl, Pentyl, Hexyl, Octyl, Decyl oder Tetradecyl.

Bis zu vier Substituenten des Guanidinium-Kations [C(NR⁸R⁹)(NR¹⁰R¹¹)(NR¹²R¹³)]⁺ können auch paarweise derart verbunden sein, dass mono-, bi- oder polycyclische Moleküle entstehen.

Ohne Einschränkung der Allgemeinheit sind Beispiele für solche Guanidinium-Kationen: 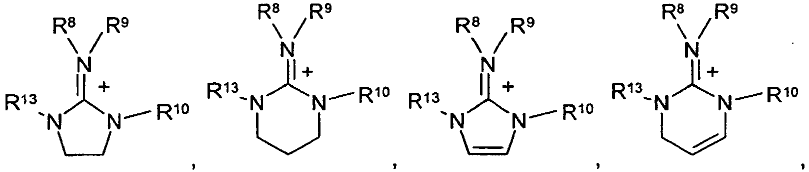 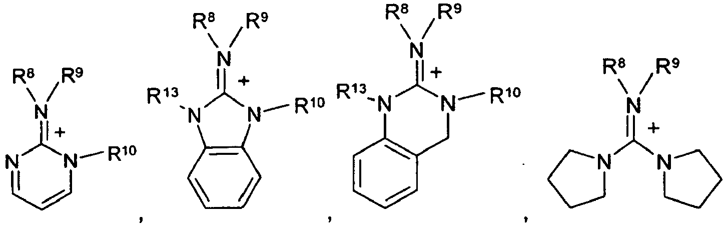 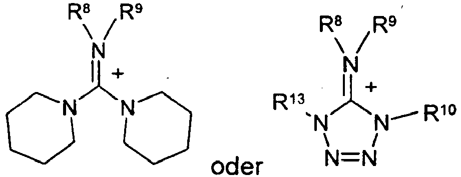 wobei die Substituenten R⁸ bis R¹⁰ und R¹³ eine zuvor angegebene oder besonders bevorzugte Bedeutung haben können.

Gegebenenfalls können die Carbocyclen oder Heterocyclen der zuvor angegebenen Guanidinium-Kationen noch durch C₁- bis C₆-Alkyl, C₁- bis C₆-Alkenyl, CN, NR¹₂, F, Cl, Br, I, C₁-C₆-Alkoxy, SCF₃, SO₂CF₃ oder SO₂NR¹₂ substituiert sein, wobei R¹ eine zuvor angegebene Bedeutung hat, substituiertes oder unsubstituiertes Phenyl oder unsubstituierter oder substituierter Heterocyclus substituiert sein.

Bis zu vier Substituenten des Thiouroniumkations [C(NR³R⁴)(SR⁵)(NR⁶R⁷)]⁺ können auch paarweise derart verbunden sein, dass mono-, bi- oder polycyclische Moleküle entstehen.

Ohne Einschränkung der Allgemeinheit sind im Folgenden Beispiele für solche Thiouroniumkationen angegeben: 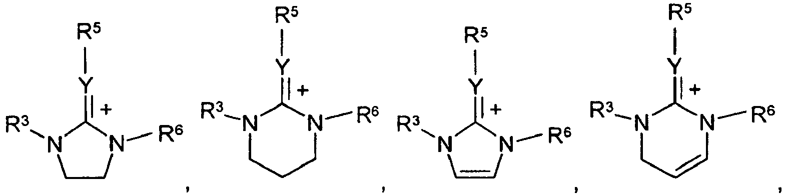 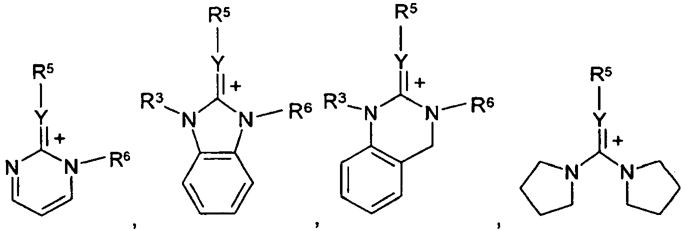 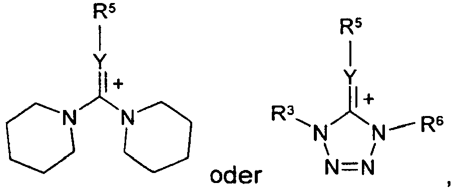 worin Y = S bedeutet
und wobei die Substituenten R³, R⁵ und R⁶ eine zuvor angegebene oder besonders bevorzugte Bedeutung haben können.

Gegebenenfalls können die Carbocyclen oder Heterocyclen der zuvor angegebenen Moleküle noch durch C₁- bis C₆-Alkyl, C₁- bis C₆-Alkenyl, CN, NR¹₂, F, Cl, Br, I, C₁-C₆-Alkoxy, SCF₃, SO₂CF₃ oder SO₂NR¹₂ oder substituiertes oder unsubstituiertes Phenyl oder unsubstituierter oder substituierter Heterocyclus substituiert sein, wobei R¹ eine zuvor angegebene Bedeutung hat.

Die Substituenten R³ bis R¹³ sind jeweils unabhängig voneinander bevorzugt eine geradkettige oder verzweigte Alkylgruppe mit 1 bis 10 C-Atomen. Die Substituenten R³ und R⁴, R⁶ und R⁷, R⁸ und R⁹, R¹⁰ und R¹¹ und R¹² und R¹³ in Verbindungen der Formeln (7) und (8) können dabei gleich oder verschieden sein. Besonders bevorzugt sind R³ bis R¹³ jeweils unabhängig voneinander Methyl, Ethyl, n-Propyl, Isopropyl, n-Butyl, tert.-Butyl, sek.-Butyl, Phenyl oder Cyclohexyl, ganz besonders bevorzugt Methyl, Ethyl, n-Propyl, Isopropyl oder n-Butyl.

Als Substituenten R^{1'} bis R^{4'} von Verbindungen der Formel (9) kommen erfindungsgemäß dabei neben H bevorzugt in Frage: C₁- bis C₂₀, insbesondere C₁- bis C₁₂-Alkylgruppen, und gesättigte oder ungesättigte, d.h. auch aromatische, C₃- bis C₇-Cycloalkylgruppen, die mit C₁- bis C₆-Alkylgruppen substituiert sein können, insbesondere Phenyl.

Die Substituenten R^{1'} und R^{4'} sind jeweils unabhängig voneinander insbesondere bevorzugt Methyl, Ethyl, Isopropyl, Propyl, Butyl, sek.-Butyl, Pentyl, Hexyl, Octyl, Decyl, Cyclohexyl, Phenyl oder Benzyl. Sie sind ganz besonders bevorzugt Methyl, Ethyl, n-Butyl oder Hexyl. In Pyrrolidin-, Piperidin-, Indolin-, Pyrrolidinium-, Piperidinium- oder Indolinium-Verbindungen sind die beiden Substituenten R^{1'} und R^{4'} bevorzugt unterschiedlich.

Der Substituent R^{2'} oder R^{3'} ist jeweils unabhängig voneinander insbesondere H, Methyl, Ethyl, Isopropyl, Propyl, Butyl, sek.-Butyl, tert.-Butyl, Cyclohexyl, Phenyl oder Benzyl. Besonders bevorzugt ist R^{2'} H, Methyl, Ethyl, Isopropyl, Propyl, Butyl oder sek.-Butyl. Ganz besonders bevorzugt sind R^{2'} und R^{3'} H.

Die C₁-C₁₂-Alkylgruppe ist beispielsweise Methyl, Ethyl, Isopropyl, Propyl, Butyl, sek.-Butyl oder tert.-Butyl, ferner auch Pentyl, 1-, 2- oder 3-Methylbutyl, 1,1-, 1,2- oder 2,2-Dimethylpropyl, 1-Ethylpropyl, Hexyl, Heptyl, Octyl, Nonyl, Decyl, Undecyl oder Dodecyl. Gegebenenfalls Difluormethyl, Trifluormethyl, Pentafluorethyl, Heptafluorpropyl oder Nonafluorbutyl.

Als Substituenten R¹⁴ und R¹⁵ der Verbindungen der Formeln (10) und (11) kommen erfindungsgemäß dabei neben H bevorzugt in Frage: C₁- bis C₂₀-, besonders bevorzugt C₁- bis C₁₄-Alkylgruppen und ganz besonders bevorzugt C₁- bis C₄-Alkylgruppen, die jeweils unverzweigt oder verzweigt sein können und wobei ein oder mehrere Reste R¹⁴ mit -NR^{1*}₂ substituiert sein können.

Die Substituenten -R¹⁴ und -CH₂-R¹⁵ können dabei gleich oder verschieden sein. In einer bevorzugten Ausführungsform sind alle drei Substituenten - R¹⁴ und -CH₂-R¹⁵ gleich. In einer weiteren bevorzugten Ausführungsform sind zwei der Substituenten -R¹⁴ und -CH₂-R¹⁵ gleich.

Die Substituenten R¹⁴ sind insbesondere bevorzugt H, Methyl, Ethyl, Isopropyl oder Dimethylaminomethyl.

Die Substituenten R¹⁵ sind insbesondere bevorzugt H oder Methyl.

Die Verbindung der Formel (11) ist bevorzugt ausgewählt aus den Verbindungen der Formel N(CH₃)₃, N(C₂H₅)₃, HN(C₂H₅)₂, (CH₃)₂N-CH₂-N(CH₃)₂ oder CH₃N((CH(CH₃)₂)₂.

Ein geradkettiges oder verzweigtes Alkenyl mit 2 bis 20 C-Atomen, wobei auch mehrere Doppelbindungen vorhanden sein können, ist beispielsweise Allyl, 2- oder 3-Butenyl, Isobutenyl, sek.-Butenyl, ferner 4-Pentenyl, iso-Pentenyl, Hexenyl, Heptenyl, Octenyl, -C₉H₁₇, -C₁₀H₁₉ bis -C₂₀H₃₉; vorzugsweise Allyl, 2- oder 3-Butenyl, Isobutenyl, sek.-Butenyl, ferner bevorzugt ist 4-Pentenyl, iso-Pentenyl oder Hexenyl.

Ein geradkettiges oder verzweigtes Alkinyl mit 2 bis 20 C-Atomen, wobei auch mehrere Dreifachbindungen vorhanden sein können, ist beispielsweise Ethinyl, 1- oder 2-Propinyl, 2- oder 3-Butinyl, ferner 4-Pentinyl, 3-Pentinyl, Hexinyl, Heptinyl, Octinyl, -C₉H₁₅, -C₁₀H₁₇ bis -C₂₀H₃₇, vorzugsweise Ethinyl, 1- oder 2-Propinyl, 2- oder 3-Butinyl, 4-Pentinyl, 3-Pentinyl oder Hexinyl.

Aryl-C₁-C₆-alkyl bedeutet beispielsweise Benzyl, Phenylethyl, Phenylpropyl, Phenylbutyl, Phenylpentyl oder Phenylhexyl, wobei sowohl der Phenylring als auch die Alkylenkette, wie zuvor beschrieben teilweise oder vollständig mit Halogenen, insbesondere -F und/oder -Cl, oder teilweise mit -OR¹, - NR¹₂, -CN, -C(O)NR¹₂, -SO₂NR¹₂ substituiert sein können.

Unsubstituierte gesättigte oder teilweise oder vollständig ungesättigte Cycloalkylgruppen mit 3-7 C-Atomen sind daher Cyclopropyl, Cyclobutyl, Cyclopentyl, Cyclohexyl, Cycloheptyl, Cyclopentenyl, Cyclohexenyl, Phenyl, Cycloheptenyl, welche mit C₁- bis C₆-Alkylgruppen substituiert sein können, wobei wiederum die Cycloalkylgruppe oder die mit C₁- bis C₆-Alkylgruppen substituierte Cycloalkylgruppe auch mit Halogenatomen wie F, Cl, Br oder I, insbesondere F oder Cl oder mit -OR¹, -CN, -C(O)NR¹₂, -SO₂NR¹₂ substituiert sein kann.

In den Substituenten R, R² bis R¹³ oder R^{1'} bis R^{4'} können auch ein oder zwei nicht benachbarte und nicht α-ständig zum Heteroatom gebundene Kohlenstoffatome, durch Atome und/oder Atomgruppierungen ausgewählt aus der Gruppe -O-, -S-, -S(O)-, -SO₂-, -N⁺R¹₂-, -C(O)NR¹-, -SO₂NR¹-, oder -P(O)R¹- ersetzt werden, mit R¹ = nicht, teilweise oder perfluoriertes C₁- bis C₆-Alkyl, C₃- bis C₇-Cycloalkyl, unsubstituiertes oder substituiertes Phenyl.

Ohne Einschränkung der Allgemeinheit sind Beispiele für derart modifizierte Substituenten R, R² bis R¹³ und R^{1'} bis R^{4'}:
-OCH₃, -OCH(CH₃)₂, -CH₂OCH₃, -CH₂-CH₂-O-CH₃, -C₂H₄OCH(CH₃)₂,-C₂H₄SC₂H₅, -C₂H₄SCH(CH₃)₂, -S(O)CH₃, -SO₂CH₃, -SO₂C₆H₅, -SO₂C₃H₇,-SO₂CH(CH₃)₂, -SO₂CH₂CF₃, -CH₂SO₂CH₃, -O-C₄H₈-O-C₄H₉, -CF₃, -C₂F₅,-C₃F₇, -C₄F₉, -C(CF₃)₃, -CF₂SO₂CF₃, -C₂F₄N(C₂F₅)C₂F₅. -CHF₂, -CH₂CF₃,-C₂F₂H₃, -C₃FH₆, -CH₂C₃F₇, -C(CFH₂)₃, -CH₂C₆H₅ oder P(O)(C₂H₅)₂.

In R¹ ist C₃- bis C₇-Cycloalkyl beispielsweise Cyclopropyl, Cyclobutyl, Cyclopentyl, Cyclohexyl oder Cycloheptyl.

In R¹ bedeutet substituiertes Phenyl, durch C₁- bis C₆-Alkyl, C₁- bis C₆-Alkenyl, CN, NR¹₂, F, Cl, Br, I, C₁-C₆-Alkoxy, SCF₃, SO₂CF₃ oder SO₂NR*₂ substituiertes Phenyl, wobei R* ein nicht, teilweise oder perfluoriertes C₁- bis C₆-Alkyl oder C₃- bis C₇-Cycloalkyl wie für R¹ definiert bedeutet, beispielsweise, o-, m- oder p-Methylphenyl, o-, m- oder p-Ethylphenyl, o-, m- oder p-Propylphenyl, o-, m- oder p-Isopropylphenyl, o-, m- oder p-tert.-Butylphenyl, o-, m- oder p-Methoxyphenyl, o-, m- oder p-Ethoxyphenyl, o-, m-, p-(Trifluormethyl)phenyl, o-, m-, p-(Trifluormethoxy)phenyl, o-, m-, p-(Trifluormethylsulfonyl)phenyl, o-, m- oder p-Fluorphenyl, o-, m- oder p-Chlorphenyl, o-, m- oder p-Bromphenyl, o-, m- oder p-Iodphenyl, weiter bevorzugt 2,3-, 2,4-, 2,5-, 2,6-, 3,4- oder 3,5-Dimethylphenyl, 2,3-, 2,4-, 2,5-, 2,6-, 3,4- oder 3,5-Dihydroxyphenyl, 2,3-, 2,4-, 2,5-, 2,6-, 3,4- oder 3,5-Difluorphenyl, 2,3-, 2,4-, 2,5-, 2,6-, 3,4- oder 3,5-Dichlorphenyl, 2,3-, 2,4-, 2,5-, 2,6-, 3,4- oder 3,5-Dibromphenyl, 2,3-, 2,4-, 2,5-, 2,6-, 3,4- oder 3,5-Dimethoxyphenyl, 5-Fluor-2-methylphenyl, 3,4,5-Trimethoxyphenyl oder 2,4,5-Trimethylphenyl.

In R^{1'} bis R^{4'} wird als Heteroaryl ein gesättigter oder ungesättigter mono- oder bicyclischer heterocyclischer Rest mit 5 bis 13 Ringgliedern verstanden, wobei 1, 2 oder 3 N- und/oder 1 oder 2 S- oder O-Atome vorliegen können und der heterocyclische Rest ein- oder mehrfach durch C₁- bis C₆-Alkyl, C₁- bis C₆-Alkenyl, CN, NR¹₂, F, Cl, Br, I, C₁-C₆-Alkoxy, SCF₃, SO₂CF₃ oder SO₂NR¹₂ substituiert sein kann, wobei R¹ eine zuvor angegebene Bedeutung hat.

Der heterocyclische Rest ist vorzugsweise substituiertes oder unsubstituiertes 2- oder 3-Furyl, 2- oder 3-Thienyl, 1-, 2- oder 3-Pyrrolyl, 1-, 2-, 4- oder 5-Imidazolyl, 3-, 4- oder 5-Pyrazolyl, 2-, 4- oder 5-Oxazolyl, 3-, 4- oder 5-Isoxazolyl, 2-, 4- oder 5-Thiazolyl, 3-, 4- oder 5-Isothiazolyl, 2-, 3- oder 4-Pyridyl, 2-, 4-, 5- oder 6-Pyrimidinyl, weiterhin bevorzugt 1,2,3-Triazol-1-, -4- oder -5-yl, 1,2,4-Triazol-1-, -4- oder -5-yl, 1- oder 5-Tetrazolyl, 1,2,3-Oxadiazol-4- oder -5-yl 1,2,4-Oxadiazol-3- oder -5-yl, 1,3,4-Thiadiazol-2- oder -5-yl, 1,2,4-Thiadiazol-3- oder -5-yl, 1,2,3-Thiadiazol-4- oder -5-yl, 2-, 3-, 4-, 5- oder 6-2H-Thiopyranyl, 2-, 3- oder 4-4H-Thiopyranyl, 3- oder 4-Pyridazinyl, Pyrazinyl, 2-, 3-, 4-, 5-, 6- oder 7-Benzofuryl, 2-, 3-, 4-, 5-, 6- oder 7-Benzothienyl, 1-, 2-, 3-, 4-, 5-, 6- oder 7-1H-Indolyl, 1-, 2-, 4- oder 5-Benzimidazolyl, 1-, 3-, 4-, 5-, 6- oder 7-Benzopyrazolyl, 2-, 4-, 5-, 6- oder 7-Benzoxazolyl, 3-, 4-, 5-, 6- oder 7-Benzisoxazolyl, 2-, 4-, 5-, 6- oder 7-Benzthiazolyl, 2-, 4-, 5-, 6- oder 7-Benzisothiazolyl, 4-, 5-, 6- oder 7-Benz-2,1,3-oxadiazolyl, 1-, 2-, 3-, 4-, 5-, 6-, 7- oder 8-Chinolinyl, 1-, 3-, 4-, 5-, 6-, 7- oder 8-Isochinolinyl, 1-, 2-, 3-, 4- oder 9-Carbazolyl, 1-, 2-, 3-, 4-, 5-, 6-, 7-, 8- oder 9-Acridinyl, 3-, 4-, 5-, 6-, 7- oder 8-Cinnolinyl, 2-, 4-, 5-, 6-, 7- oder 8-Chinazolinyl oder 1-, 2- oder 3-Pyrrolidinyl.

Unter Heteroaryl-C₁-C₆-alkyl wird nun in Analogie zu Aryl-C₁-C₆-alkyl beispielsweise Pyridinyl-methyl, Pyridinyl-ethyl, Pyridinyl-propyl, Pyridinylbutyl, Pyridinyl-pentyl, Pyridinyl-hexyl verstanden, wobei weiterhin die zuvor beschriebenen Heterocyclen in dieser Weise mit der Alkylenkette verknüpft werden können.

HetN⁺ ist bevorzugt 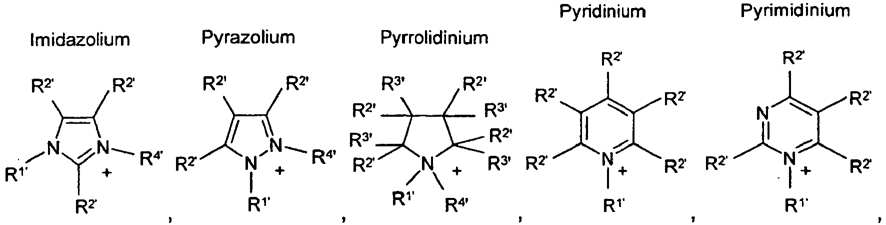 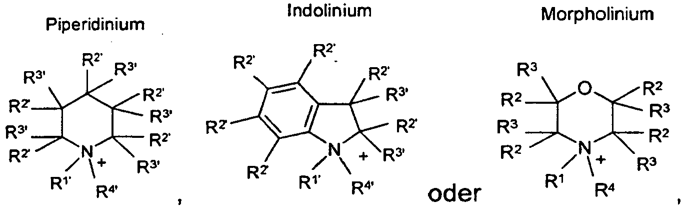 wobei die Substituenten R^{1'} bis R^{4'} jeweils unabhängig voneinander eine zuvor beschriebene Bedeutung haben.

Besonders bevorzugt ist das organische Kation [Kt]^{x+}ausgewählt aus der Gruppe umfassend Imidazolium-, Pyridinium-, Pyrrolidinium-, Ammonium-, Phosphonium- oder Iminium-Kationen, wie sie oben definiert sind.

Besonders geeignete Imidazolium-, Pyrrolidinium- und AmmoniumKationen werden ausgewählt aus der Gruppe Tetraalkylammonium, 1,1-Dialkylpyrrolidinium, 1-Alkyl-1-Alkoxyalkylpyrrolidnium oder 1,3-Dialkylimidazolium, wobei die Alkylgruppen oder die Alkoxygruppe in der Alkoxyalkylgruppe jeweils unabhängig voneinander 1 bis 10 C-Atome haben können. Ganz besonders bevorzugt haben die Alklygruppen 1 bis 6 C-Atome und die Alkoxygruppe 1 bis 3 C-Atome.

Die Alkylgruppen im Tetraalkylammonium können daher gleich oder verschieden sein. Bevorzugt sind drei Alkylgruppen gleich und eine Alkylgruppe verschieden oder zwei Alkylgruppen sind gleich und die anderen beiden sind verschieden. Bevorzugte Tetraalkylammonium-Kationen sind beispielsweise Trimethyl(ethyl)ammonium, Triethyl(methyl)ammonium, Tripropyl(methyl)ammonium, Tributyl(methyl)ammonium, Tripentyl(methyl)ammonium, Trihexyl(methyl)ammonium, Triheptyl(methyl)ammonium, Trioctyl(methyl)ammonium, Trinonyl(methyl)ammonium, Tridecyl(methyl)ammonium, Trihexyl(ethyl)ammonium, Ethyl(trioctyl)ammonium, Propyl(dimethyl)ethylammonium, Butyl(dimethyl)ethylammonium, Methoxyethyl(dimethyl)ethylammonium, Methoxyethyl(diethyl)methylammonium, Methoxyethyl(dimethyl)propylammonium, Ethoxyethyl(dimethyl)ethylammonium. Besonders bevorzugte quartäre Ammoniumkationen sind Propyl(dimethyl)ethylammonium und/oder Methoxyethyl(dimethyl)ethylammonium.

Bevorzugte 1,1-Dialkylpyrrolidinium-Kationen sind beispielsweise 1,1-Dimethyl-pyrrolidinium, 1-Methyl-1-ethyl-pyrrolidinium, 1-Methyl-1-propyl-pyrrolidinium, 1-Methyl-1-butyl-pyrrolidinium, 1-Methyl-1-pentyl-pyrrolidinium, 1-Methyl-1-hexyl-pyrrolidinium, 1-Methyl-1-heptyl-pyrrolidinium, 1-Methyl-1-octyl-pyrrolidinium, 1-Methyl-1-nonyl-pyrrolidinium, 1-Methyl-1-decyl-pyrrolidinium, 1,1-Diethyl-pyrrolidinium, 1-Ethyl-1-propyl-pyrrolidinium, 1-Ethyl-1-butyl-pyrrolidinium, 1-Ethyl-1-pentyl-pyrrolidinium, 1-Ethyl-1-hexyl-pyrrolidinium, 1-Ethyl-1-heptyl-pyrrolidinium, 1-Ethyl-1-octyl-pyrrolidinium, 1-Ethyl-1-nonyl-pyrrolidinium, 1-Ethyl-1-decyl-pyrrolidinium, 1,1-Dipropyl-pyrrolidinium, 1-Propyl-1-methyl-pyrrolidinium, 1-Propyl-1-butyl-pyrrolidinium, 1-Propyl-1-pentyl-pyrrolidinium, 1-Propyl-1-hexyl-pyrrolidinium, 1-Propyl-1-heptyl-pyrrolidinium, 1-Propyl-1-octyl-pyrrolidinium, 1-Propyl-1-nonyl-pyrrolidinium, 1-Propyl-1-decyl-pyrrolidinium, 1,1-Dibutyl-pyrrolidinium, 1-Butyl-1-methyl-pyrrolidinium, 1-Butyl-1-pentyl-pyrrolidinium, 1-Butyl-1-hexyl-pyrrolidinium, 1-Butyl-1-heptyl-pyrrolidinium, 1-Butyl-1-octyl-pyrrolidinium, 1-Butyl-1-nonyl-pyrrolidinium, 1-Butyl-1-decyl-pyrrolidinium, 1,1-Dipentyl-pyrrolidinium, 1-Pentyl-1-hexyl-pyrrolidinium, 1-Pentyl-1-heptyl-pyrrolidinium, 1-Pentyl-1-octyl-pyrrolidinium, 1-Pentyl-1-nonyl-pyrrolidinium, 1-Pentyl-1-decyl-pyrrolidinium, 1,1-Dihexyl-pyrrolidinium, 1-Hexyl-1-heptyl-pyrrolidinium, 1-Hexyl-1-octyl-pyrrolidinium, 1-Hexyl-1-nonyl-pyrrolidinium, 1-Hexyl-1-decyl-pyrrolidinium, 1,1-Dihexyl-pyrrolidinium, 1-Hexyl-1-heptyl-pyrrolidinium, 1-Hexyl-1-octyl-pyrrolidinium, 1-Hexyl-1-nonyl-pyrrolidinium, 1-Hexyl-1-decyl-pyrrolidinium, 1,1-Diheptyl-pyrrolidinium, 1-Heptyl-1-octyl-pyrrolidinium, 1-Heptyl-1-nonyl-pyrrolidinium, 1-Heptyl-1-decyl-pyrrolidinium, 1,1-Dioctylpyrrolidinium, 1-Octyl-1-nonyl-pyrrolidinium, 1-Octyl-1-decyl-pyrrolidinium, 1-1-Dinonyl-pyrrolidinium, 1-Nony-1-decyl-pyrrolidinium oder 1,1-Didecylpyrrolidinium. Ganz besonders bevorzugt ist 1-Butyl-1-methyl-pyrrolidinium oder 1-Propyl-1-methyl-pyrrolidinium.

Bevorzugte 1-Alkyl-1-Alkoxyalkylpyrrolidinium-Kationen sind beispielsweise 1-Methoxyethyl-1-methyl-pyrrolidinium, 1-Methoxyethyl-1-ethyl-pyrrolidinium, 1-Methoxyethyl-1-propyl-pyrrolidinium, 1-Methoxyethyl-1-butyl-pyrrolidinium, 1-Ethoxyethyl-1-methyl-pyrrolidinium, 1-Ethoxymethyl-1-methyl-pyrrolidinium. Ganz besonders bevorzugt ist 1-Methoxyethyl-1-methyl-pyrrolidinium.

Bevorzugte 1,3-Dialkylimidazolium-Kationen sind beispielsweise 1-Ethyl-3-methyl-imidazolium, 1-Methyl-3-propyl-imidazolium, 1-Butyl-3-methyl-imidazolium, 1-Methyl-3-pentylimidazolium, 1-Ethyl-3-propyl-imidazolium, 1-Butyl-3-ethyl-imidazolium, 1-Ethyl-3-pentyl-imidazolium, 1-Butyl-3-propyl-imidazolium, 1,3-Dimethyl-imidazolium, 1,3-Diethyl-imidazolium, 1,3-Dipropypylimidazolium, 1,3-Dibutylimidazolium, 1,3-Dipentylimidazolium, 1,3-Dihexylimidazolium, 1,3-Diheptylimidazolium, 1,3-Dioctylimidazolium, 1,3-Dinonylimidazolium, 1,3-Didecylimidazolium, 1-Hexyl-3-methyl-imidazolium, 1-Heptyl-3-methyl-imidazolium, 1-Methyl-3-octyl-imidazolium, 1-Methyl-3-nonyl-imidazolium, 1-Decyl-3-methyl-imidazolium, 1-Ethyl-3-hexyl-imidazolium, 1-Ethyl-3-heptyl-imidazolium, 1-Ethyl-3-octyl-imidazolium, 1-Ethyl-3-nonyl-imidazolium oder 1-Decyl-3-ethyl-imidazolium. Besonders bevorzugte Kationen sind 1-Ethyl-3-methyl-imidazolium, 1-Butyl-3-methyl-imidazolium oder 1-Methyl-3-propyl-imidazolium.

Ganz besonders bevorzugt handelt es sich bei dem organischen Kation [Kt]^{x+} um ein Kation ausgewählt aus der Gruppe umfassend 1-Ethyl-3-Methyl-Imidazolium und 1-Butyl-3-Methyl-Imidazolium.

In Formel (3) des erfindungsgemäßen Verfahrens steht [X]⁻ für ein hydrophiles Anion. Bevorzugt handelt es sich um ein Anion ausgewählt aus der Gruppe umfassend Cl⁻, Br⁻, I⁻, Sulfat, Sulfonat, Acetat und BF₄⁻.

Eine weitere ganz besonders bevorzugte Ausführungsform der vorliegenden Erfindung ist ein Verfahren zur Herstellung einer Verbindung der Formel (1) wie zuvor definiert, worin [Kt]^{x+} ein Iminium-Kation ist, wobei eine Verbindung der Formel (2) wie zuvor definiert mit einem tertiären oder sekundären Amin der Formel (11) wie zuvor definiert, umgesetzt wird. Diese Ausführungsform hat den Vorteil, dass eine Verbindung der Formel (1) enthaltend das organische Iminium-Kation direkt in einem Schritt hergestellt werden kann, ohne dass in einem zweiten Schritt eine anschließende Metathese-Reaktion notwendig ist. Das folgende Reaktionsschema veranschaulicht beispielhaft diese Reaktion:

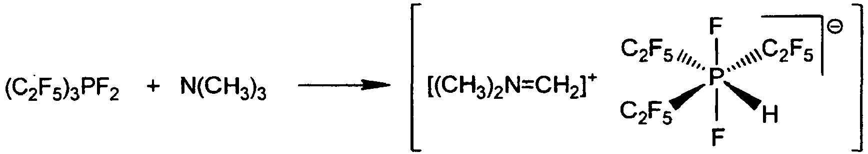

Die hierbei entstehenden Iminium-Salze sind sehr reaktive Verbindungen.

Beispielsweise sind diese Verbindungen Zwischenstufen der der Vilsmeier-Haack Reaktion, Ugi Reaktion, Houben-Hoesch Reaktion, Duff Reaktion und Stephen Aldehydsynthese. Iminumsalze sind außerdem nützliche Ausgangsverbindungen für die Synthese von β-Oxo-Carbonsäureestern und β-Diketonen [Organikum, WILEY-VCH, 2001, S. 617] oder für die Synthese von Pyrrolidiniumderivativen über eine Cope-Umlagerung und intramolekulare Mannich-Reaktion [L.E. Overmann, Acc. Chem. Res., 25 (1992), p.352-359]. Iminiumsalze reagieren mit Alkoholen (Alcoholaten), Aminen, Grignard-Reagenzien, Alkyl- und Aryl-Lithiumverbindungen, Verbindungen mit aktiven Methyl(CH₂)-Gruppen, Diazoalkanen (z.B. CH₂N₂) oder 1,3-Dienen.

Iminiumsalze werden vielfach bei der Synthese von Amino-Verbindungen, quaternären Ammoniumsalzen, Aldehyden, Ketonen, heterocyclischen Verbindungen oder Steroiden genutzt [Chemical Encyclopaedia (Russ.) Vol 2, p.418-419, Moskau, 1990].

In aktuelleren Publikationen [T. Yamaguchi, et al., Chem and Ind., 1972, p.380; J.of the Am. Chem. Soc., 126 (2004), p. 5968; J. of the Am. Chem. Soc., 128 (2006), p. 5648; J. of the Am. Chem. Soc.,129 (2007), p. 780; J. of the Am. Chem. Soc., 130 (2008), p. 11005; Tetrahedron, 62 (2006), p. 6312; Org. Letters, 6 (2006), p. 4093; Org. Letters, 10 (2008), p. 1417; Acc. Chem. Res., 42 (2009), p.335; Angew. Chem. Int. Ed., 49 (2010), p. 3037] wird das breite Anwendungsspektrum von Iminiumsalzen gezeigt. Die direkte Synthese dieser Salze aus tertiären oder sekundären Aminen ermöglicht daher weiterhin die Verbesserung und Vereinfachung der Herstellung von einer Vielzahl an Verbindungen.

So können ausgehend von den im erfindungsgemäßen Verfahren erhaltenen Iminium-Salzen nach Formel (1), wobei [Kt]^{x+} ein Iminium-Kation ist, beispielsweise intermolekulare Umlagerungen stattfinden. Alternativ können die Iminium-Salze auch spontan mit den nucleophilen Reagenzien weiterreagieren, was im folgenden Reaktionsschema exemplarisch dargestellt ist:

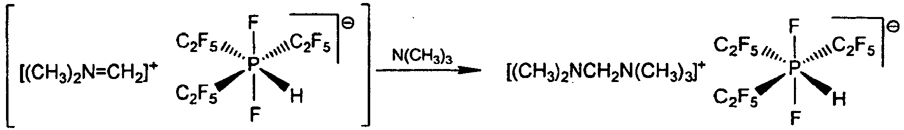

Erfindungsgemäß kann die Umsetzung im ersten Schritt des erfindungsgemäßen Verfahrens bei -80 bis 50°C erfolgen. Bevorzugt findet die Umsetzung im ersten Schritt bei -20 bis 25°C statt. Insbesondere bevorzugt ist eine Temperatur von 0°C.

Die Auswahl einer geeigneten Temperatur für die Umsetzung ist dabei von besonderer Bedeutung, damit im Gegensatz zu der in WO 03/087113 offenbarten Reaktion keine Reduktion des Substrats stattfindet, sondern die Addition eines Hydridions erfolgt.

Die Umsetzung im zweiten Schritt des erfindungsgemäßen Verfahrens erfolgt bevorzugt bei Raumtemperatur.

Die Umsetzung im ersten Schritt des erfindungsgemäßen Verfahrens erfolgt bevorzugt in einem aprotischen Lösungsmittel, wie z.B. Dioxan, Tetrahydrofuran, Diethylether, Methyl-tert-butylether, Hexan, Cyclohexan, Benzol, Dichlormethan oder Dichlorethan. Besonders bevorzugt kommen cyclische oder lineare Ether, wie Tetrahydrofuran, Diethylether oder Methyl-tert-butylether zum Einsatz. Ganz besonders bevorzugt handelt es sich bei dem Lösungsmittel um Tetrahydrofuran.

Die Umsetzung im zweiten Schritt des erfindungsgemäßen Verfahrens erfolgt bevorzugt in Wasser oder in einem Gemisch aus Wasser und organischem Lösungsmittel.

Mithilfe des erfindungsgemäßen Verfahrens lassen sich auf einfache und bequeme Weise verschiedene Salze mit (Perfluoralkyl)fluorohydrogenphosphat-Anionen herstellen. Das folgende Reaktionsschema veranschaulicht anhand der Reaktion von (Perfluoralkyl)fluorophosphoranen mit beispielsweise LiAlH₄ als Hydridionen-Donator den ersten Schritt des erfindungsgemäßen Verfahrens:

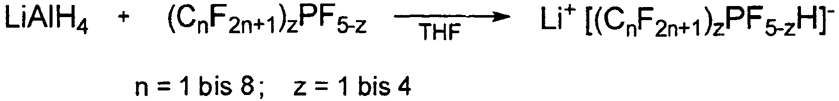

Das auf diese Weise erhaltene Lithiumsalz Lithium (Perfluoralkyl)-fluorohydrogenphosphat (Li[(CₙF₂ₙ₊₁)_{z}PF_{5-z}H]) ist nicht nur zum Einsatz als Leitsalz von Interesse (wie z.B. in Li-Ionen Batterien oder in Super-Kapazitoren), sondern kann auch als Ausgangsmaterial für die Synthese verschiedener Salze mit organischen Kationen (ionische Flüssigkeiten) genutzt werden. Diese Reaktion stellt den zweiten Schritt des erfindungsgemäßen Verfahrens dar und wird folgend exemplarisch veranschaulicht:

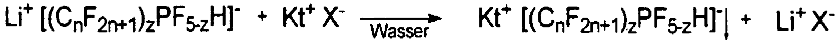

Daher ist die Verwendung einer Verbindung nach Formel (1), wobei [Kt]⁺ ein anorganisches Kation ist, zur Herstellung einer Verbindung der Formel (1), wobei [Kt]⁺ ein organisches Kation ist, ebenfalls Gegenstand der vorliegenden Erfindung.

Zum Beispiel können auf diese Weise ionische Flüssigkeiten hergestellt werden.

Für die mithilfe des erfindungsgemäßen Verfahrens hergestellten Verbindungen nach Formel (1), wobei [Kt]⁺ ein organisches Kation ist, findet sich eine Vielzahl von Anwendungen:
So eignen sie sich aufgrund ihrer Reinheit, des nicht vorhandenen Dampfdrucks und der hohen Beständigkeit als Lösungsmittel oder Lösungsmittelzusatz in chemischen Reaktionen. Die Verwendung als Lösungsmittelzusatz erfolgt in Kombination mit anderen Lösungsmitteln. Des Weiteren können die erfindungsgemäßen ionischen Flüssigkeiten als Phasentransferkatalysatoren, Wärmeträger, als oberflächenaktive Substanzen, Weichmacher, Flammschutzmittel oder als Leitsalze eingesetzt werden. Außerdem eignen sich die erfindungsgemäßen ionischen Flüssigkeiten als Extraktionsmittel in Stofftrennverfahren. Aufgrund ihrer elektrochemischen Eigenschaften können die erfindungsgemäßen ionischen Flüssigkeiten insbesondere in elektrochemischen Anwendungen, wie z.B. als Elektrolyt in Batterien, Sensoren, Akkumulatoren, Kapazitoren oder Kondensatoren oder als Bestandteil einer Solarzelle (Lösungsmittel und/oder Elektrolyt), vorzugsweise einer Farbstoffsolarzelle oder eines Sensors Einsatz finden.

Die mithilfe des erfindungsgemäßen Verfahrens hergestellten ionischen Flüssigkeiten weisen gegenüber bekannten ionischen Flüssigkeiten veränderte Eigenschaften, wie z.B. eine veränderte Stabilität, auf.

Diese hydrophoben ionischen Flüssigkeiten können (optional durch Erhitzen) mit Wasser oder mit Lauge in hydrophile ionische Flüssigkeiten mit Bis(perfluoralkyl)phosphinat- ((CₙF₂ₙ₊₁)₂P(O)O⁻) oder Perfluoralkylphosphonat-Anion ((CₙF₂ₙ₊₁)P(O)O₂⁻²) überführt werden:

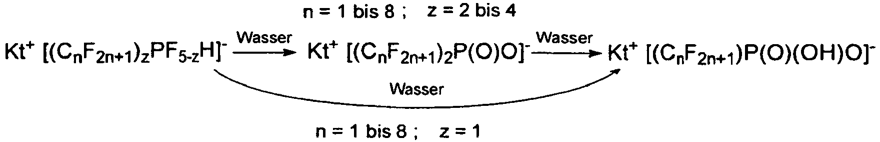

Aufgrund dieser außergewöhnlichen Eigenschaften der erfindungsgemäßen Verbindungen lassen sich je nach Bedürfnis unterschiedliche Verbindungen mit bestimmten Eigenschaften herstellen, zum Beispiel für die Verwendung in Extraktionsverfahren. Eine *in situ* Umwandlung von hydrophoben ionischen Flüssigkeiten zu hydrophilen ionischen Flüssigkeiten ermöglicht die Entwicklung eines einfachen Isolierungsverfahrens von wasserunlöslichen Produkten im Anschluss an eine Synthese in hydrophoben ionischen Flüssigkeiten mit (Perfluoralkyl)fluorohydrogenphosphat-Anion.

Ein weiterer Unterschied von ionischen Flüssigkeiten mit (Perfluoralkyl)fluorohydrogenphosphat-Anionen zu anderen ionischen Flüssigkeiten ist ihre reduzierte Beständigkeit. Dies lässt sich darauf zurückführen, dass die Symmetrie der (Perfluoralkyl)fluorohydrogenphosphat-Anionen gegenüber dem FAP-Anion aufgehoben ist.

Unter Hydrolyse entstehen Bis(perfluoralkyl)phosphinate oder Perfluoralkylphosphonate, wie bereits anhand von Schema 3 dargestellt. Bei weiter fortschreitender Hydrolyse werden Phosphate gebildet, wie folgend dargestellt:

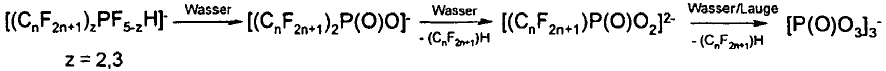

Somit erhält man letztendlich natürliche Produkte in Form von Phosphaten (in der Umwelt entsteht gewöhnlich Calciumphosphat).

Ein weiterer Gegenstand der vorliegenden Erfindung sind Verbindungen der Formel (1)

[Kt]^{x+}[(CₙF₂ₙ₊₁)_{z}PF_{5-z}H⁻ₓ (1)

worin [Kt]^{x+} ein anorganisches oder organisches Kation ist,
mit n = 1-8, x = 1-4 und z = 1-4,
wobei die Verbindungen [(CF₃)₂PF₃H]⁻K⁺, [(CF₃)₂PF₃H]⁻[(CH₃)₂NH₂]⁺, [(CF₃)PF₄H]⁻K⁺ und [(CF₃)PF₄H]⁻[(CH₃)₂NH₂]⁺ ausgeschlossen sind.

Das Kation [Kt]^{x+} der erfindungsgemäßen Verbindungen gemäß Formel (1) kann für ein organisches oder anorganisches Kation stehen.

Sofern es sich um ein anorganisches Kation handelt, ist dies bevorzugt ein Metallkation. Besonders bevorzugt handelt es sich um ein Alkalimetallkation, vorzugsweise um ein Lithium-, Kalium- oder Natrium-Kation.

Erfindungsgemäße Verbindungen mit anorganischem Kation eignen sich insbesondere als Ausgangsmaterialien für die Synthese von erfindungsgemäßen Verbindungen mit organischen Kationen, sogenannten ionischen Flüssigkeiten, wie zuvor beschrieben.

Besonders bevorzugt sind daher Verbindungen der Formel (1), in denen [Kt]^{x+} ein organisches Kation ist.

Das organische Kation ist bevorzugt ausgewählt aus der Gruppe umfassend Ammonium-, Phosphonium-, Uronium-, Thiouronium-, Sulfonium-, Oxonium-, Guanidiniumkationen, heterocyclische Kationen und Iminium-Kationen, welche wie oben beschrieben definiert sind.

Besonders bevorzugt handelt es sich bei [Kt]^{x+} der erfindungsgemäßen Verbindung nach Formel (1) um ein organisches Kation, welches ausgewählt ist aus der Gruppe umfassend Imidazolium-, Pyridinium-, Pyrrolidinium-, Ammonium-, Phosphonium-, Sulfonium- und IminiumKationen, wie oben definiert.

Ganz besonders bevorzugt handelt es sich bei dem organischen Kationen [Kt]^{x+} um ein Kation ausgewählt aus der Gruppe umfassend Phenylphosphonium, 1-Ethyl-3-Methyl-Imidazolium, 1-Butyl-3-Methyl-Imidazolium, N-Hexyl-Pyridinium und 1-Butyl-2,3-Dimethyl-Imidazolium.

Bevorzugt steht z in den erfindungsgemäßen Verbindungen der Formel (1) für 2 oder 3; besonders bevorzugt ist z=3.

In Formel (1) steht außerdem n bevorzugt für 2, 3 oder 4, besonders bevorzugt für 2 oder 4. Ganz besonders bevorzugt steht n für 2.

Insbesondere bevorzugt sind die Verbindungen der Formel (1) ausgewählt aus [Kt]^{x+}[(C₂F₅)₃PF₂H]⁻ₓ oder [Kt]^{x+} [(C₂F₅)₂PF₃H]⁻ₓ, worin [Kt]^{x+} für ein organisches Kation ausgewählt aus der Gruppe umfassend Ammonium-, Phosphonium-, Uronium-, Thiouronium-, Sulfonium-, Oxonium-, Guanidiniumkationen und heterocyclische Kationen, wie zuvor definiert, steht; vorzugsweise sind die Verbindungen ausgewählt aus Tetraphenylphosphonium-difluorhydridotris(pentafluorethyl)phosphat, 1-Ethyl-3-methyl-imidazolium-difluorhydridotris(pentafluorethyl)-phosphat, 1-Butyl-3-methyl-imidazolium-difluorhydridotris(pentafluorethyl)-phosphat, N-Hexyl-pyrridinium-difluorhydridotris(pentafluorethyl)phosphat, N-Butyl-N-methyl-pyrrolidinium-difluorhydridotris(pentafluorethyl)phosphat und 1-Butyl-2,3-dimethylimidazolium-difluorhydridotris(pentafluorethyl)-phosphat.

Wie oben beschrieben weisen die erfindungsgemäßen Verbindungen viele verschiedene Eigenschaften auf, die ihren Einsatz in verschiedenen Anwendungsbereichen ermöglichen.

Die folgenden Ausführungsbeispiele sollen die Erfindung erläutern, ohne sie zu begrenzen. Die Erfindung ist im gesamten beanspruchten Bereich entsprechend ausführbar. Ausgehend von den Beispielen lassen sich auch mögliche Varianten ableiten. Insbesondere sind die Merkmale und Bedingungen der in den Beispielen beschriebenen Reaktionen auch auf andere, nicht im Detail aufgeführte, aber unter den Schutzbereich der Ansprüche fallende Reaktionen anwendbar.

### Beispiele:

### Beispiel 1: Tetraphenylphosphoniumdifluorhydridotris-(pentafluorethyl)-phosphat

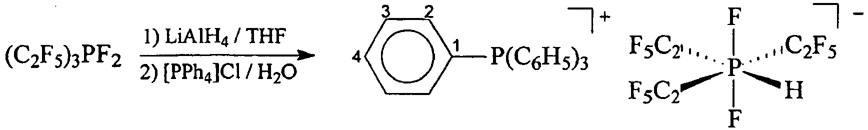

Zu 5,6 ml einer einmolaren LiAlH₄/THF-Lösung (5,6 mmol) werden bei 0°C langsam 2,38 g (5,4 mmol) (C₂F₅)₃PF₂ gegeben und 20 Minuten gerührt. Die Lösung wird bei 0°C mit Wasser hydrolysiert, wobei ein farbloser Niederschlag (Aluminium-Hydroxid) entsteht, und mit 1,89 g (5,1 mmol) [PPh4]Cl in 5 ml Chloroform versetzt. Der Niederschlag wird abfiltriert und mit Chloroform gewaschen. Die wässrige Phase wird abgetrennt und die Chloroform-Phase im Vakuum getrocknet. Es verbleibt ein farbloser Niederschlag.
Ausbeute (bezogen auf [PPh₄]Cl): 3,18 g (78%)
Schmelzpunkt: 114 - 116°C

**Tabelle 1.1: ¹⁹F-NMR-Daten von [PPh₄][P(C₂F₅)₃F₂H] in CDCl₃**

| δ [ppm] | Multiplizität | J [Hz] | Zuordnung | Integral |
|---|---|---|---|---|
| -81,4 | m | - | *trans-*CF₃ | 1,6 |
| -83,1 | m | - | *cis*-CF₃ | 3,3 |
| -113,9 | d, d, m | ¹J_{(PF)} = 737 | PF | 1 |
| | | ²J_{(FH)} = 58 | | |
| -120,6 | d, m | ²J_{(PF)} = 104 | *trans*-CF₂ | 1 |
| -127,3 | d, m | ²J_{(PF)} = 93 | *cis*-CF₂ | 2 |

**Tabelle 1.2: ³¹P-NMR-Daten von [PPh₄][P(C₂F₅)₃F₂H] in CDCl₃**

| δ [ppm] | Multiplizität | J [Hz] | Zuordnung | Integral |
|---|---|---|---|---|
| 23,4 | s | - | [PPh₄][(C₂F₅)₃PF₂H] | 1 |
| -154,9 | d, t, quin, t | ¹J_{(PF)} = 738 | [PPh₄][(C₂F₅hPF₂H] | 0,9 |
| | | ²J_{(PF*trans*)} = 104 | | |
| | | ²J_{(PF*cis*)} = 93 | | |
| | | ¹J_{(PH)} = 678 | | |

**Tabelle 1.3: ¹H-NMR-Daten von [PPh₄][P(C₂F₅)₃F₂H] in CDCl₃**

| δ [ppm] | Multiplizität | J [Hz] | Zuordnung | Integral |
|---|---|---|---|---|
| 5,6 | d, t, t, m | ¹J_{(PH)} = 678 | [(C₂F₅)₃PF₂H]⁻ | 1 |
| | | ²J_{(HF)} = 64 | | |
| | | ³J_{(HF*trans*)} = 13 | | |
| 7,6 - 7,9 | m | - | [P(C₆H₅)₄]⁺ | 25 |

**Tabelle 1.4: Daten der Elementaranalyse**

| | C | H |
|---|---|---|
| berechnet | 47,01 | 2,76 |
| experimentell | 47,15 | 2,87 |

**Tabelle 1.5: Massenspektrometrische Daten (EI, 20 eV)**

| m/z | rel. Intensität [%] | Zuordnung |
|---|---|---|
| 672 | 1 | [PPh₃(C₂F₅)₃PFH]⁺ |
| 628 | 0 | [PPh₄(C₂F₅)₂PH]⁺ |
| 596 | 2 | [PPh₄(C₂F₅)(CF₃)PF₂]⁺ |
| 566 | 1 | [PPh₃(C₂F₅)₂PF₂]⁺ |
| 551 | 0 | [PPh₃(C₂F₅)₂PH]⁺ |
| 520 | 2 | [PPh₃(C₂F₅)(CF₃)PF₂]⁺ |
| 490 | 4 | [PPh₂(C₂F₅)₂PF₂]⁺ |
| 444 | 2 | [PPh(C₂F₅)(CF₃)PF₂]⁺ |
| 414 | 13 | [PPh(C₂F₅)₂PF₂]⁺ |
| 355 | 6 | [PPh₂(C₂F₅)PF]⁺ |
| 337 | 53 | [PPh₄]⁺ |
| 277 | 7 | [PPh(C₂F₅)PF]⁺ |
| 262 | 100 | [PPh₃]⁺ |
| 183 | 23 | [(C₂F₅)PFH]⁺ |
| 108 | 7 | [PPh]⁺ |
| 78 | 9 | [Ph]⁺ |

**Tabelle 1.6: ESI-Massenspektrum - negativer Scanmodus**

| Signal | rel. Intensität [%] | Zuordnung |
|---|---|---|
| 307,18 | 19 | [(C₂F₅)₂PF₂]⁻ |
| 417,21 | 100 | [(C₂F₅)₃PF₂H]⁻ |

### Beispiel 2: 1-Ethyl-3-methylimidazoliumdifluorhydridotris-(pentafluorethyl)-phosphat, [EMIM][P(C₂F₅)₃F₂H]

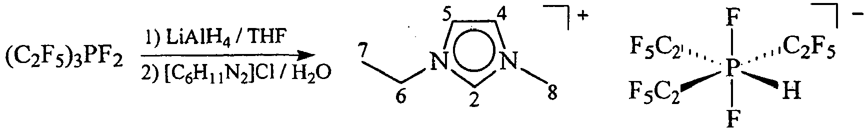

Zu 20 ml einer einmolaren LiAlH₄/THF-Lösung (20 mmol) werden bei 0°C langsam 8,1 g (19 mmol) (C₂F₅)₃PF₂ gegeben und 30 Minuten gerührt. Die Lösung wird mit Wasser bei 0°C hydrolysiert, wobei ein farbloser Niederschlag (Aluminium-Hydroxid) entsteht, und mit 2,8 g (19 mmol) 1-Ethyl-3-methyl-imidazoliumchlorid, gelöst in 2 ml Wasser, versetzt. Nach 30-minütigem Rühren wird der Niederschlag abfiltriert. Es setzt sich eine zweite Phase ab, die abgetrennt und zweimal mit Wasser extrahiert wird. Anschließend wird sie im Vakuum getrocknet. Es verbleibt eine farblose Flüssigkeit.
Ausbeute (bezogen auf 1-Ethyl-3-methylimidazoliumchlorid): 3,4 g (33 %)
Analytische Daten von [EMIM][P(C₂F₅)₃F₂H]:

| | |
|---|---|
| Schmelzpunkt [°C] | -2,4 |
| Zersetzung [°C] | 176 |
| H₂O-Gehalt [ppm] | 43 |
| Cl⁻-Gehalt [ppm] | <5 |
| F⁻-Gehalt [ppm] | 112 |

**Tabelle 2.1: ¹⁹F-NMR-Daten von [EMIM][P(C₂F₅)₃F₂H] in Aceton-d₆**

| δ [ppm] | Multiplizität | J [Hz] | Zuordnung | Integral |
|---|---|---|---|---|
| -81,1 | m, d | ⁴J_{(FH)} = 1 | *trans-*CF₃ | 1 |
| -82,3 | quin, d | ³J_{(PF)} = 9 | *cis*-CF₃ | 2 |
| | | ⁴J_{(FH)} = 2 | | |
| -114,1 | d, d, m | ¹J_{(PF)} = 736 | PF | 0,7 |
| | | ²J_{(FH}) = 64 | | |
| -119,7 | d, m | ²_{(PF)} = 104 | *trans*-CF₂ | 0,6 |
| -126,3 | d, m | ²J_{(PF)} = 93 | *cis*-CF₂ | 1,2 |

**Tabelle 2.2: ³¹P-NMR-Daten von [EMIM][P(C₂F₅)₃F₂H] in Aceton-d₆**

| δ [ppm] | Multiplizität | J [Hz] | Zuordnung |
|---|---|---|---|
| -154,4 | d, t, quin, t | ¹J_{(PF)} = 735 | [C₂F₅)₃PF₂H]⁻ |
| | | ¹J_{(PH)} = 678 | |
| | | ²J_{(PF*trans*)} = 104 | |
| | | ²J_{(PF*cis*}) = 93 | |

**Tabelle 2.3: ¹H-NMR-Daten von [EMIM][P(C₂F₅)₃F₂H] in Aceton-d₆**

| δ [ppm] | Multiplizität | J [Hz] | Zuordnung | Integral |
|---|---|---|---|---|
| 1,6 | t | ³J_{(HH)} = 7 | H7 | 3 |
| 4,0 | s | - | H8 | 3 |
| 4,4 | q | ³J_{(HH)} = 7 | H6 | 2 |
| 5,7 | d, t, t, m | ¹J_{(PH)} = 675 | [(C₂F₅)₃PF₂H]⁻ | 1 |
| | | ²J_{(HF)} = 63 | | |
| | | ³J_{(HF*trans*)} = 13 | | |
| 7,7/7,8 | t | ³J_{(HH)} = 2 | H4/5 | 2 |
| 9,0 | s | - | H2 | 1 |

**Tabelle 2.4: ¹³C{¹H}-NMR-Daten von [EMIM][P(C₂F₅)₃F₂H] in Aceton-d₆**

| δ [ppm] | Multiplizität | J [Hz] | Zuordnung |
|---|---|---|---|
| 14,5 | s | - | C7 |
| 35,6 | s | - | C8 |
| 44,9 | s | - | C6 |
| 119,9 | m | - | -CF₂CF₃ |
| 122,2 | s | - | C5 |
| 122,9 | m | - | -CF₂CF₃ |
| 123,9 | s | - | C4 |
| 136,2 | s | - | C2 |

| | | | |
|---|---|---|---|
| ^{a} {¹H} ^{b} {¹⁹F} | | | |

### Beispiel 3: 1-Butyl-3-methylimidazolium-difluorhydrido-tris(pentafluorethyl)-phosphat, [BMIM][P(C₂F₅)₃F₂H]

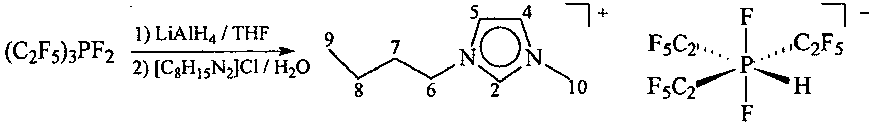

Zu 30 ml einer einmolaren LiAlH₄/THF-Lösung (30 mmol) werden bei 0°C langsam 12,1 g (28,5 mmol) (C₂F₅)₃PF₂ gegeben und 30 Minuten gerührt. Die Lösung wird mit Wasser bei 0°C hydrolysiert, wobei ein farbloser Niederschlag (Aluminium-Hydroxid) entsteht, und mit 4,9 g (28,5 mmol) 1-Butyl-3-methyl-imidazoliumchlorid in Wasser versetzt. Nach 20-minütigem Rühren wird der Niederschlag abfiltriert. Es setzt sich eine zweite Phase ab, die abgetrennt und zweimal mit Wasser extrahiert wird. Anschließend wird sie im Vakuum getrocknet. Es verbleibt eine farblose viskose Flüssigkeit.
Ausbeute (bezogen auf 1-Butyl-3-methyl-imidazoliumchlorid): 10,2 g (64 %)
Analytische Daten von [BMIM][P(C₂F₅)₃F₂H]:

| | |
|---|---|
| Glasübergang [°C] | -86 |
| Kaltkristallisation [C] | -38 |
| Schmelzpunkt [°C] | -2,6 |
| Zersetzung [°C] | 177 |
| H₂O-Gehalt [ppm] | 40 |
| Cl⁻-Gehalt [ppm] | <5 |
| F⁻-Gehalt [ppm] | 48 |

Viskosität und Dichte von [BMIM][P(C₂F₅)₃F₂H]:

| T [°C] | γ [mm²/s] | ρ [g/cm³] |
|---|---|---|
| 20 | 96,48 | 1,581 |
| 30 | 58,94 | 1,571 |
| 40 | 38,64 | 1,560 |
| 50 | 26,78 | 1,549 |
| 60 | 19,45 | 1,538 |
| 70 | 14,65 | 1,527 |
| 80 | 11,38 | 1,517 |

**Tabelle 3.1: ¹⁹F-NMR-Daten von [BMIM][P(C₂F₅)₃F₂H] in Aceton-d₆**

| δ [ppm] | Multiplizität | J [Hz] | Zuordnung | Integral |
|---|---|---|---|---|
| -80,8 | m | - | *trans*-C**F**₃ | 1 |
| -81,9 | m | - | *cis*-C**F**₃ | 1,9 |
| -115,0 | d, d, m | ¹J_{(PF)} = 724 | P**F** | 0,6 |
| | | ²J_{(FH}) = 65 | | |
| -119,1 | d, m | ²J_{(PF)} = 107 | *trans*-C**F**₂ | 0,6 |
| -125,7 | d, m | ²J_{(PF)} = 92 | *cis*-C**F**₂ | 1,3 |

**Tabelle 3.2: ³¹P-NMR-Daten von [BMIM][P(C₂F₅)₃F₂H] in Aceton-d₆**

| δ [ppm] | Multiplizität | J [Hz] | Zuordnung |
|---|---|---|---|
| -154,2 | d, t, quin, t | ¹J_{(PF)} = 737 | [C₂F₅)₃PF₂H]⁻ |
| | | ¹J_{(PH)} = 676 | |
| | | ²J_{(PF*trans*)} = 1 04 | |
| | | ²J_{(PF*cis*)} = 94 | |

**Tabelle 3.3: ¹H-NMR-Daten von [BMIM][P(C₂F₅)₃F₂H] in Aceton-d₆**

| δ [ppm] | Multiplizität | J [Hz] | Zuordnung | Integral |
|---|---|---|---|---|
| 0,9 | t | ³J_{(HH)} = 7 | H9 | 3,1 |
| 1,4 | sext | ³J_{(HH)} = 8 | H8 | 2,1 |
| 1,9 | quin | ³J_{(HH)} = 7 | H7 | 2,2 |
| 4,0 | s | - | H10 | 3,1 |
| 4,4 | t | ³J_{(HH)} = 8 | H6 | 2 |
| 5,7 | d, t, t, m | ¹J_{(PH)} = 675 | [(C₂F₅)₃PF₂H]⁻ | 0,6 |
| | | ²J_{(HF)} = 63 | | |
| | | ³J_{(HF*trans*)} = 13 | | |
| 7,7 | m | ³J_{(HH)} = 7 | H4, H5 | 2 |
| 9,1 | s | - | H2 | 1 |

**Tabelle 3.4: ¹³C{¹H}-NMR-Daten von [BMIM][P(C₂F₅)₃F₂H] in Aceton-d₆**

| δ [ppm] | Multiplizität | J [Hz] | Zuordnung |
|---|---|---|---|
| 12,7 | s | - | C9 |
| 19,0 | s | - | C8 |
| 31,8 | s | - | C7 |
| 35,7 | s | - | C6 |
| 49,4 | s | - | C10 |
| 118,9 | m | - | -CF₂CF₃ |
| 122,5 | s | - | C4 |
| 122,9 | m | - | -CF₂CF₃ |
| 123,9 | s | - | C5 |
| 136,4 | s | - | C2 |

| | | | |
|---|---|---|---|
| ^{a} {¹H} ^{b} {¹⁹F} | | | |

### Beispiel 4: N-Hexyl-pyrridiniumdifluorhydridotris-(pentafluorethyl)-phosphat, [HPy][P(C₂F₅)₃F₂H]

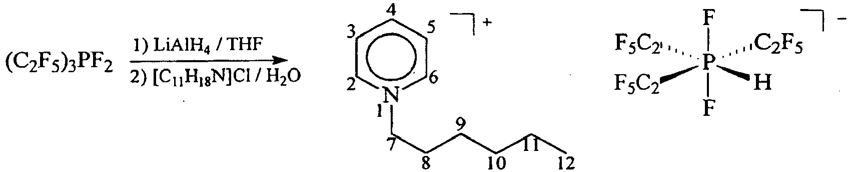

Zu 30 ml einer einmolaren LiAlH₄/THF-Lösung (30 mmol) werden bei 0°C langsam 12,14 g (28,5 mmol) (C₂F₅)₃PF₂ gegeben und 30 Minuten gerührt. Die Lösung wird mit Wasser bei 0°C hydrolysiert, wobei ein farbloser Niederschlag (Aluminium-Hydroxid) entsteht, und mit 5,67 g (28,5 mmol) N-Hexyl-pyrridiniumchlorid, gelöst in 10 ml Wasser, versetzt. Nach 30-minütigem Rühren wird der Niederschlag abfiltriert. Die erhaltene Emulsion wird im Vakuum getrocknet. Der trübe viskose Rückstand wird dreimal mit Wasser extrahiert und erneut im Vakuum getrocknet. Es verbleibt eine farblose Flüssigkeit.
Ausbeute (bezogen auf N-Hexyl-pyrridiniumchlorid): 9,98 g (59 %)
Analytische Daten von [HPy][P(C₂F₅)₃F₂H]

| | |
|---|---|
| Glasübergang [°C] | -76 |
| Zersetzung [°C] | 166 |
| H₂O-Gehalt [ppm] | 27 |
| Cl⁻-Gehalt [ppm] | 143 |

**Tabelle 4.1: ¹⁹F-NMR-Daten von [HPy][P(C₂F₅)₃F₂H] in Aceton-d₆**

| δ [ppm] | Multiplizität | J [Hz] | Zuordnung | Integral |
|---|---|---|---|---|
| -79,9 | m | - | *trans-CF₃* | 1 |
| -81,1 | m | - | cis-CF₃ | 2 |
| -112,9 | d, d, m | ¹J_{(PF)} = 737 | PF | 0,6 |
| | | ²J_{(FH)} = 61 | | |
| -118,6 | d, m | ²J_{(PF)} = 105 | *trans-CF₂* | 0,5 |
| -125,2 | d, m | ²J_{(PF)} = 92 | *cis*-CF₂ | 1,2 |

**Tabelle 4.2: ³¹P-NMR-Daten von [HPy][P(C₂F₅)₃F₂H] in Aceton-d₆**

| δ [ppm] | Multiplizität | J [Hz] | Zuordnung |
|---|---|---|---|
| -152,7 | d, t, quin, t | ¹J_{(PF)} = 737 | [C₂F₅)₃PF₂H]⁻ |
| | | ¹J_{(PH)} = 676 | |
| | | ²J_{(PF*trans*)} = 104 | |
| | | ²J(_{PF*cis*}) = 94 | |

**Tabelle 4.3: ¹H-NMR-Daten von [HPy][P(C₂F₅)₃F₂H] in Aceton-d₆**

| δ [ppm] | Multiplizität | J [Hz] | Zuordnung | Integral |
|---|---|---|---|---|
| 0,9 | m | | H12 | 3 |
| 1,3; 1,9 | m | | H8-H11 | 9 |
| 4,5 | t | ³J_{(HH)} = 7 | H7 | 2 |
| 5,6 | d, t, t, m | ¹J_{(PH)} = 673 | [(C₂F₅)₃PF₂H]⁻ | 1 |
| | | ²J_{(HF)} = 63 | | |
| | | ³J_{(HF*trans*)} = 13 | | |
| 8,0 | m | - | H3, H5 | 2 |
| 8,5 | t | ³J_{(HH)} = 8 | H4 | 1 |
| 8,7 | d | ³J_{(HH)} = 6 | H2, H6 | 2 |

**Tabelle 4.4: ¹³C-{¹H}-NMR-Daten von [HPy][P(C₂F₅)₃F₂H] in Aceton-d₆**

| δ [ppm] | Multiplizität | J [Hz] | Zuordnung |
|---|---|---|---|
| 13,1 | s | - | C12 |
| 22,0 | s | - | C11 |
| 25,2 | s | - | C10 |
| 30,7 | s | - | C9 |
| 30,8 | s | - | C8 |
| 61,9 | s | - | C7 |
| 118,2 | m | - | -CF₂CF₃ |
| 120,9 | m | - | -CF₂CF₃ |
| 128,4 | s | - | C4 |
| 144,4 | s | - | C3, C5 |
| 145,7 | s | - | C2, C6 |

| | | | |
|---|---|---|---|
| ^{a} {¹H} ^{b} {¹⁹F} | | | |

### Beispiel 5: 1-Butyl-2,3-dimethylimidazolium-difluorhydrido-tris(pentafluorethyl)-phosphat, [BMMIM][P(C₂F₅)₃F₂H]

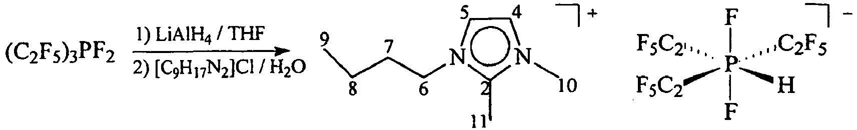

Zu 30 ml einer einmolaren LiAlH₄/THF-Lösung (30 mmol) werden bei 0°C langsam 12,1 g (28,5 mmol) (C₂F₅)₃PF₂ gegeben und 30 Minuten gerührt. Die Lösung wird mit Wasser bei 0°C hydrolysiert, wobei ein farbloser Niederschlag (Aluminium-Hydroxid) entsteht, und mit 5,4 g (28,5 mmol) 1-Butyl-2,3-dimethyl-imidazoliumchlorid, gelöst in 2 ml Wasser, versetzt. Nach 20-minütigem Rühren wird der Niederschlag abfiltriert. Es setzt sich eine zweite Phase ab, die abgetrennt und zweimal mit Wasser extrahiert wird. Anschließend wird sie im Vakuum getrocknet. Es verbleibt eine farblose Flüssigkeit.
Ausbeute (bezogen auf 1-Butyl-2,3-dimethylimidazoliumchlorid): 9,1 g (55 %)
Analytische Daten von [BMMIM][P(C₂F₅)₃F₂H]:

| | |
|---|---|
| Glasübergang [°C] | -78 |
| Kaltkristallisation [°C] | -24 |
| Schmelzpunkt [°C] | 9,6 |
| Zersetzung [°C] | 179 |
| H₂O-Gehalt [ppm] | 122 |
| Cl⁻-Gehalt [ppm] | 6 |
| F⁻-Gehalt [ppm] | 198 |

**Tabelle 5.1: ¹⁹F-NMR-Daten von [BMMIM][P(C₂F₅)₃F₂H] in Aceton-d₆**

| δ [ppm] | Multiplizität | J [Hz] | Zuordnung | Integral |
|---|---|---|---|---|
| -79,9 | m | | *trans-CF₃* | 1 |
| -81,1 | m | | *cis*-CF₃ | 2 |
| -112,9 | d, d, m | ¹J_{(PF)} = 737 | PF | 0,7 |
| | | ²J_{(FH)} = 65 | | |
| -118,6 | d, m | ²J_{(PF)} = 105 | *trans*-CF₂ | 0,6 |
| -125,1 | d, m | ²J_{(PF)} = 95 | *cis*-CF₂ | 1,2 |

**Tabelle 5.2: ³¹P-NMR-Daten von [BMMIM][P(C₂F₅)₃F₂H] in Aceton-d₆**

| ö [ppm] | Multiplizität | J [Hz] | Zuordnung |
|---|---|---|---|
| -153,7 | d, t, quin, t | ¹J_{(PF)} = 737 | [C₂F₅)₃PF₂H]⁻ |
| | | ¹J_{(PH)} = 674 | |
| | | ²J_{(PF*trans*}) = 104 | |
| | | ²J_{(PF*cis*)} = 92 | |

**Tabelle 5.3: ¹H-NMR-Daten von [BMMIM][P(C₂F₅)₃F₂H] in Aceton-d₆**

| *δ* [ppm] | Multiplizität | J [Hz] | Zuordnung | Integral |
|---|---|---|---|---|
| 1,0 | t | ³J_{(HH)} = 7 | H9 | 1,5 |
| 1,4 | sext | ³J_{(HH)} = 7 | H8 | 1 |
| 1,9 | quin | ³J_{(HH)} = 7 | H7 | 1 |
| 2,8 | s | - | H11 | 1,5 |
| 3,9 | s | - | H10 | 1,6 |
| 4,3 | t | ³J_{(HH)} = 7 | H6 | 1,1 |
| 5,7 | d, t, t, m | ¹J_{(PH)} = 675 | [(C₂F₅)₃PF₂H]⁻ | - |
| | | ²J_{(HF)} = 63 | | |
| | | ³J_{(HF*trans*)} = 13 | | |
| 7,6 | m | - | H4, H5 | 1 |

**Tabelle 5.4: ¹³C-{¹H}-NMR-Daten von [BMMIM][P(C₂F₅)₃F₂H] in Aceton-d₆**

| δ [ppm] | Multiplizität | J [Hz] | Zuordnung |
|---|---|---|---|
| 8,9 | s | - | C11 |
| 12,7 | s | - | C9 |
| 19,1 | s | - | C8 |
| 31,2 | s | - | C7 |
| 34,6 | s | - | C10 |
| 48,0 | s | - | C6 |
| 120,8 | s | - | C4/5 |
| 122,2 | s | - | C4/5 |
| 144,4 | s | - | C2 |

### Beispiel 6: Hydrolyse von [EMIm][P(C₂F₅)₃F₂H]

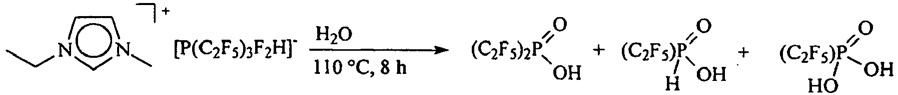

0,72 g [EMIm][P(C₂F₅)₃PF₂H] werden in 10 ml H₂O über 8 Stunden bei 110°C gerührt. Anschließend werden flüchtige Bestandteile im Vakuum entfernt und der Rückstand NMR-spektroskopisch untersucht.

**Tabelle 6.1: ³¹P-NMR-spektroskopische Daten des Rückstands in H₂O**

| δ [ppm] | Multiplizität | *J* [Hz] | Zuordnung |
|---|---|---|---|
| 5,4 | d, t | ¹*J*_{(PH)} = 586 | (C₂F₅)**P**H(O)OH |
| | | ²*J*_{(PF)} = 80 | |
| 2,3 | quin | ²*J*_{(PF)} = 76 | (C₂F₅)₂**P**(O)OH |
| -3,5 | t | ²*J*_{(PF)} = 78 | (C₂F₅)**P**(O)(OH)₂ |

### Beispiel 7: Synthese von [Me₂NCH₂NMe₃][P(C₂F₅)₃F₂H]

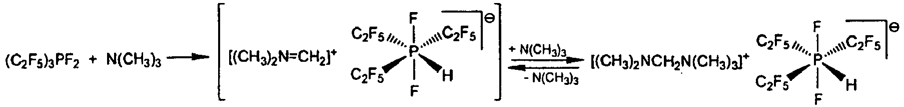

Zu 5,14 g (12,1 mmol) Tris(pentafluoethyl)difluorphosphoran, (C₂F₅)₃PF₂, werden 0,43 g (7,3 mmol) Trimethylamine, NMe₃, kondensiert. Das Gemisch wird auf Raumtemperatur gebracht, wobei zwei Phasen zu beobachten sind. Anschließend wird das Gemisch 24 Stunden bei Raumtemperatur gerührt. Nach einigen Stunden bildet sich ein farbloser Feststoff. Nach einem Tag werden flüchtige Substanzen im Vakuum entfernt. Zurück bleibt ein farbloser Feststoff. Ausbeute des Rohproduktes (bezogen auf NMe₃) ist nahezu quantitative (1,99 g).

**Tabelle 7.1: ³¹P-NMR-Daten von [(CH₃)₂NCH₂N(CH₃)₃][P(C₂F₅)₃F₂H] in CD₃CN**

| *δ*, ppm | Multiplizität | *J* / Hz | Zuordnung |
|---|---|---|---|
| -153,7 | d, t, quin, t | ¹*J*_{(PH)} = 674 | [**P**(C₂F₅)₃F₂H]⁻ |
| | | ¹*J*_{(PF)} = 733 | |
| | | ²*J*_{(PF*cis*)} = 94 | |
| | | ²*J*_{(PF*trans*)} = 104 | |

**Tabelle 7.2: ¹⁹F-NMR-Daten von [(CH₃)₂NCH₂N(CH₃)₃] [P(C₂F₅)₃F₂H] in CD₃CN**

| *δ*, ppm | Multiplizität | *J* / Hz | Zuordnung | Integral |
|---|---|---|---|---|
| -80,6 | m | - | *trans-*C**F**₃ | 3 |
| -81,8 | m | - | *cis*-C**F**₃ | 6 |
| -113,6 | d, d, m, | ¹*J*_{(PF)} = 733 | P**F** | 2 |
| | | ²*J*_{(FH)} = 62 | | |
| -119,1 | d, m | ²*J*_{(PF*trans*)} = 104 | *trans-*C**F**₂ | 2 |
| -125,7 | d, m | ²*J*_{(PF*cis*)} = 94 | *cis*-C**F**₂ | 4 |

**Tabelle 7.3: ¹H-NMR-spektroskopische Daten von [(CH₃)₂NCH₂N(CH₃)₃] [P(C₂F₅)₃F₂H] in CD₃CN**

| *δ*, ppm | Multiplizität | *J* / Hz | Zuordnung | Integral |
|---|---|---|---|---|
| 2,6 | s | - | (C**H**₃)₂N- | 6 |
| 2,8 | s | - | -N(C**H**₃)₃ | 9 |
| 4,0 | s | - | -NC**H**₂N- | 2 |
| 5,7 | d, t, m | ¹*J*_{(PH)} = 675 | [P(C₂F₅)₃PF₂**H**]⁻ | 1 |
| | | ²*J*_{(FH)} = 63 | | |

**Tabelle 7.4: ¹³C{¹H}-NMR-spektroskopische Daten von [(CH₃)₂NCH₂N(CH₃)₃] [P(C₂F₅)₃F₂H] in CD₃CN**

| *δ*, ppm | Multiplizität | *J* / Hz | Zuordnung | Integral |
|---|---|---|---|---|
| 45,3 | s | - | (CH₃)₂N- | |
| 48,4 | s | - | -N(CH₃)₃ | |
| 90,5 | s | - | -NCH₂N- | |

### Beispiel 8: Umsetzung von N(C₂H₅)₃ mit (C₂F₅)₃PF₂

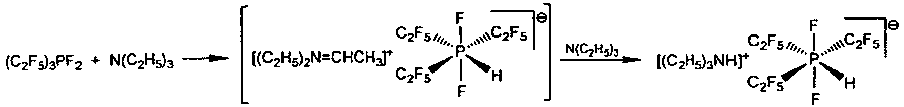

Zu 3,77 g (8,85 mmol) Tris(pentafluoethyl)difluorphosphoran, (C₂F₅)₃PF₂, werden 0,92 g (9,07 mmol) Triethylamin, NEt₃, zugegeben. Das Gemisch wird 24 Stunden bei Raumtemperatur gerührt, dabei färbt es sich intensiv braun und wird ölig mit festen Anteilen. Flüchtige Bestandteile werden im Vakuum entfernt. Rohausbeute: 3,94 g.

Das Rohprodukt wird in CH₂Cl₂ gelöst und das Produkt, [(C₂H₅)₃NH][P(C₂F₅)₃F₂H], bei -28°C zur Kristallisation gebracht.
IR(ATR): v(NH) 3203 cm⁻¹

**Tabelle 8.1: ³¹P-NMR-Daten von [(C₂H₅)₃NH][P(C₂F₅)₃F₂H] in CD₃CN**

| δ, ppm | Multiplizität | *J* / Hz | Zuordnung |
|---|---|---|---|
| -152,6 | d, t, quin, t | ¹*J*_{(PH)} = 681 | [**P**(C₂F₅)₃F₂H]⁻ |
| | | ¹*J*_{(PF)} = 723 | |
| | | ²*J*_{(PF*trans*)} = 107 | |
| | | ²J_{(PF*cis*)} = 92 | |

**Tabelle 8.2: ¹⁹F-NMR-Daten von [(C₂H₅)₃NH][P(C₂F₅)₃F₂H] in CD₃CN**

| δ, ppm | Multiplizität | *J* / Hz | Zuordnung | Integral |
|---|---|---|---|---|
| -81,0 | m | - | *trans-CF₃* | 3 |
| -82,2 | "quin", d | 8,5/1 | *cis*-CF₃ | 6 |
| -115,3 | d, d, m | ¹*J*_{(PF)} = 719 | [P(C₂F₅)₃F₂H]⁻ | 2 |
| | | ²*J*_{(HF)} = 62 | | |
| -119,2 | d, m | ²*J*_{(PF)} = 107 | *trans-*C**F**₂ | 2 |
| -125,8 | d, m | ²*J*_{(PF)} = 95 | *cis*-C**F**₂ ([P(C₂F₅)₃F₂H]⁻) | 4 |

**Tabelle 8.3: ¹H-NMR-Daten von [(C₂H₅)₃NH][P(C₂F₅)₃F₂H] in CD₃CN**

| δ, ppm | Multiplizität | *J* / Hz | Zuordnung | Integral |
|---|---|---|---|---|
| 1,3 | t | ³*J*_{(HH)} = 7 | -C**H**₃ | 9 |
| 3,2 | quar | ³*J*_{(HH)} = 7 | -C**H**₂- | 6 |
| 5,7 | d, quin, t, m | ¹*J*_{(PH)} = 645 | [P(C₂F₅)₃F₂**H**]⁻ | 1 |
| | | ³*J*_{(FH)} = 13 | | |
| | | ³*J*_{(FH)} = 2 | | |

**Tabelle 8.4: ¹³C{¹H}-NMR- Daten von [(C₂H₅)₃NH] [P(C₂F₅)₃F₂H] in CD₃CN**

| δ, ppm | Multiplizität | *J* / Hz | Zuordnung |
|---|---|---|---|
| 8,2 | s | - | -CH₃ |
| 47,0 | s | - | -CH₂- |

### Beispiel 9: Umsetzung von HN(C₂H₅)₂ mit (C₂F₅)₃PF₂

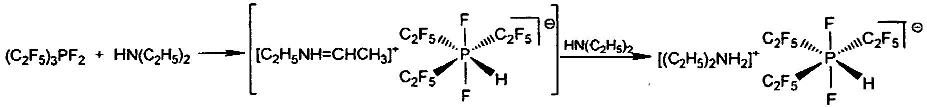

Zu 3,44 g (8,08 mmol) Tris(pentafluoethyl)difluorphosphoran, (C₂F₅)₃PF₂, werden 0,60 g (8,25 mmol) Diethylamin, HNEt₂, zugegeben. Das Gemisch wird 24 Stunden bei Raumtemperatur gerührt, dabei färbt es sich intensiv braun. Flüchtige Bestandteile werden im Vakuum entfernt. Rohausbeute: 3,18 g.

Das Rohprodukt wird in CH₂Cl₂ gelöst und das Produkt, [(C₂H₅)₂NH₂][P(C₂F₅)₃F₂H], bei -28°C zur Kristallisation gebracht.

**Tabelle 9.1: ³¹P-NMR-Daten von [(C₂H₅)₂NH₂][P(C₂F₅)₃F₂H] in CD₃CN**

| δ, ppm | Multiplizität | *J* / Hz | Zuordnung |
|---|---|---|---|
| -153,2 | d, t, quin, t | ¹*J*_{(PH)} = 679 | [**P**(C₂F₅)₃F₂H]⁻ |
| | | ¹*J*_{(PF)} = 721 | |
| | | ²*J*_{(PF*cis*)} = 92 | |
| | | ²*J*_{(PF*trans*)} = 106 | |

**Tabelle 9.2_{:} ¹⁹F-NMR- Daten von [(C₂H₅)₂NH₂][P(C₂F₅)₃F₂H] in CD₃CN**

| δ, ppm | Multiplizität | *J* / Hz | Zuordnung | Integral |
|---|---|---|---|---|
| -81,5 | m | - | *trans-CF₃* | - |
| -82,8 | m | - | *cis*-CF₃ | - |
| -114,9 | d, d, m | ¹*J*_{(PF)} = 722 | [P(C₂F₅)₃F₂H]⁻ | 2 |
| | | ²*J*(HF) = 65 | | |
| -119,3 | d, m | ²*J*_{(PF*trans*}) = 105 | *trans*-CF₂ | 2 |
| -126,0 | d, m | ²*J*_{(PF*cis*)} = 92 | *cis*-CF₂ | 4 |

**Tabelle 9.3: ¹H-NMR-Daten von [(C₂H₅)₂NH₂] [P(C₂F₅)₃F₂H] in CD₂Cl₂**

| δ, ppm | Multiplizität | *J* / Hz | Zuordnung | Integral |
|---|---|---|---|---|
| 1,4 | t | 7 | -C**H**₃ | 1,5 |
| 3,1 | quar | 7 | -C**H**₂- | 1 |
| 5,8 | d, t, quin, m | ¹*J*_{(PH)} = 681 | [P(C₂F₅)₃F₂**H**]⁻ | 0,15 |
| | | ²*J*_{(HF)} = 63 | | |
| | | ³*J*_{(HF*cis*)} = 14 | | |

**Tabelle 9.4: ¹³C{¹H}-NMR-Daten von [(C₂H₅)₂NH₂][P(C₂F₅)₃F₂H] in CD₂Cl₂**

| δ, ppm | Multiplizität | *J* / Hz | Zuordnung |
|---|---|---|---|
| 10,9 | s | - | -CH₃ |
| 43,6 | s | - | -CH₂- |

### Beispiel 10: Umsetzung von Me₂NCH₂NMe₂ mit (C₂F₅)₃PF₂

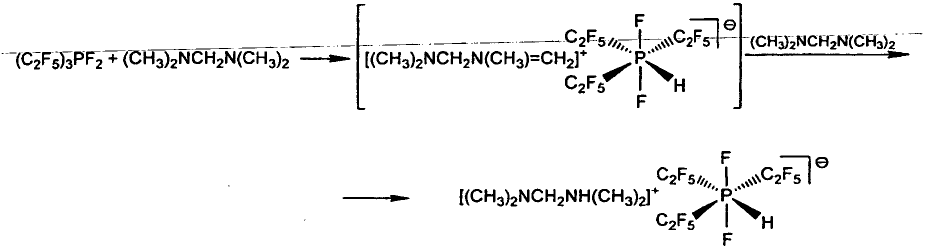

0,88 g (8,6 mmol) Me₂NCH₂NMe₂ werden bei Raumtemperatur mit 4,5 g (10,6 mmol) Tris(pentafluoethyl)difluorphosphoran, (C₂F₅)₃PF₂, versetzt. Es sind zwei Phasen zu beobachten. Das Gemisch wird 24 Stunden gerührt, wobei sich eine gelbe Emulsion bildet. Überschüssiges (C₂F₅)₃PF₂ wird im Vakuum entfernt und der Rückstand NMR-spektroskopisch untersucht.
IR(ATR): v(NH) 3202 cm⁻¹

**Tabelle 10.1.: ³¹P-NMR-Daten des [P(C₂F₅)₃F₂H]-Anions in CD₃CN**

| *δ*, ppm | Multiplizität | *J* / Hz | Zuordnung |
|---|---|---|---|
| -154,1 | d, t, quin, m | ¹*J*_{(PH)} = 678 | [**P**(C₂F₅)₃F₂H]⁻ |
| | | ¹*J*_{(PF)} = 730 | |
| | | ²*J*_{(PF*cis*)} = 93 | |

**Tabelle 10.2.: ¹⁹F-NMR-Daten des [P(C₂F₅)₃F₂H]-Anions in CD₃CN**

| *δ*, ppm | Multiplizität | *J* / Hz | Zuordnung |
|---|---|---|---|
| -81,1 | m | | *trans-CF₃* |
| -82,4 | m | | *cis*-CF₃ |
| -113,2 | d, d, m | ¹*J*_{(PF)} = 724 | [P(C₂F₅)₃F₂H]⁻ |
| | | ²*J*_{(HF)} = 68 | |
| -119,3 | d, m | ²*J*_{(PF*trans*)} = 118 | *trans-CF₂* |
| -125,7 | d, m | ²*J*_{(PF*cis*)} = 94 | *cis-CF₂* |

### Beispiel 11: Umsetzung von i-(C₃H₇)₂NCH₃ mit (C₂F₅)₃PF₂

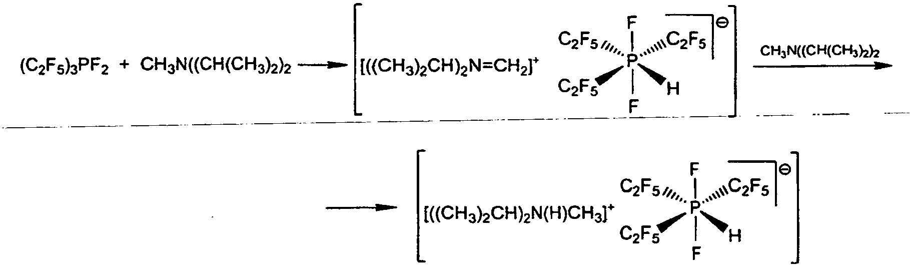

0,82 g (7,12 mmol) N,N-Diisopropylmethylamin werden in 50 ml Diethylether gelöst und bei Raumtemperatur mit 3,03 g (7,0 mmol) Tris(pentafluoethyl)-difluorphosphoran, (C₂F₅)₃PF₂, versetzt. Das Gemisch wird vier Tage gerührt und anschließend im Vakuum von flüchtigen Substanzen befreit. Zurück bleibt ein brauner Feststoff, der durch Umkristallisieren aus CH₂Cl₂ bei -28°C aufgereinigt wird. Zurück bleibt ein farbloser Feststoff. Ausbeute: 2,61 g.

**Tabelle 11.1.: ³¹P-NMR-Daten von [((CH₃)₂CH)₂N(H)CH₃][P(C₂F₅)₃F₂H] in CD₃CN**

| *δ*, ppm | Multiplizität | *J* / Hz | Zuordnung |
|---|---|---|---|
| -154,4 | d, t, quin, t | ¹*J*_{(PH)} = 675 | [**P**C₂F₅)₃F₂H]⁻ |
| | | ¹*J*_{(PF)} = 733 | |
| | | ²*J*_{(PF*trans*)} = 104 | |
| | | ²*J*_{(PF*cis*)} = 94 | |

**Tabelle 11.2.: ¹⁹F-NMR-Daten von [((CH₃)₂CH)₂N(H)CH₃][P(C₂F₅)₃F₂H] in CD₃CN**

| δ, ppm | Multiplizität | *J* / Hz | Zuordnung | Integral |
|---|---|---|---|---|
| -81,3 | m | - | *trans-CF₃* | 3 |
| -82,5 | m | - | *cis-CF₃* | 6 |
| -114,3 | d, d, m | ¹*J*_{(PF)} = 734 | [P(C₂F₅)₃**F**₂H]⁻ | 2 |
| | | ²*J*_{(HF)} = 63 | | |
| -119,8 | d, m | ²*J*_{(PF*trans*)} = 105 | *trans-*CF₂ | 2 |
| -126,5 | d, m | ²*J*_{(PF*cis*)} = 93 | *cis*-CF₂ | 4 |

**Tabelle 11.3: ¹H-NMR-Daten von [((CH₃)₂CH)₂N(H)CH₃][P(C₂F₅)₃F₂H] in CD₃CN**

| *δ*, ppm | Multiplizität | *J* / Hz | Zuordnung | Integral |
|---|---|---|---|---|
| 1,5 | d | ³*J*_{(HH)} = 7 | -CH(C**H**₃)₂ | 1 |
| 2,8 | s | | -NC**H**₃ | 0,2 |
| 3,7 | sept | ³*J*_{(HH)} = 7 | -C**H**(CH₃)₂ | 0,15 |
| 5,7 | d, t, quin, m | ¹*J*_{(PH)} = 680 | [P(C₂F₅)₃**F**₂**H**] | 0,15 |
| | | ²*J*_{(HF)} = 64 | | |
| | | ³*J*_{(HF*cis*)} = 13 | | |

**Tabelle 11.4.: ¹³C{¹H}-NMR-Daten von [((CH₃)₂CH)₂N(H)CH₃][P(C₂F₅)₃F₂H] in CD₃CN**

| *δ*, ppm | Multiplizität | *J* / Hz | Zuordnung |
|---|---|---|---|
| 19,3 | s | - | CH₃ |
| 32,3 | s | - | NCH₃ |
| 56,8 | s | - | N**C**H |

### Beispiel 12: Umsetzung von [Me₂NCH₂NMe₃](P(C₂F₅)₃F₂H) mit (PhO)₂P(O)H

[(CH₃)₂NCH₂N(CH₃)₃] [(C₂F₅)₃PF₂H] + (C₆H₅O)₂P(O)H → (CH₃)₂NCH₂P(O)(OC₆H₅)₂ + [HN(CH₃)₃] [(C₂F₅)₃PF₂H]

[Me₂NCH₂NMe₃][P(C₂F₅)₃F₂H] wird in CH₂Cl₂ gelöst und ein Überschuss (PhO)₂PHO zugegeben. Die Lösung wird NMR-spektroskopisch untersucht.

**Tabelle 12.1.: ³¹P-NMR-Daten der Produkte in CH₂Cl₂**

| *δ*, ppm | Multiplizität | *J* / Hz | Zuordnung |
|---|---|---|---|
| 7,3 | t | ²*J*_{(PCH2)} = 13 | Me₂NCH₂**P**(O)(OPh)₂ |
| -153,8 | d, t, quin, t | ¹*J*_{(PH)} = 678 | [**P**(C₂F₅)₃F₂H]⁻ |
| | | ¹*J*_{(PF)} = 731 | |
| | | ²*J*_{(PF*trans*)} = 104 | |
| | | ²*J*(_{PF*cis*}) = 93 | |

**Tabelle 12.2.: ¹³C{¹H}-NMR-Daten der Produkte in CH₂Cl₂**

| *δ*, ppm | Multiplizität | *J* / Hz | Zuordnung |
|---|---|---|---|
| 44,7 | s | - | HN(**C**H₃)₃⁺ |
| 45,1 | d | ³*J*_{(PC)} = 5 | (CH₃)₂**N**CH₂P(O)(OPh)₂ |
| 51,4 | d | ¹*J*_{(PC)} = 157 | (CH₃)₂N**C**H₂P(O)(OPh)₂ |

### Beispiel 13: Umsetzung von [Me₂NCH₂NMe₃][P(C₂F₅)₃F₂H] mit P(CH₃)₃

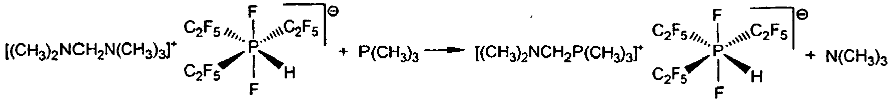

[Me₂NCH₂NMe₃][P(C₂F₅)₃F₂H] wird in CH₂Cl₂ gelöst und überschüssiges P(CH₃)₃ aufkondensiert. Die Lösung wird NMR-spektroskopisch untersucht.

**Tabelle 13.1.: ³¹P-NMR-Daten von [(CH₃)₂NCH₂P(CH₃)₃][P(C₂F₅)₃F₂H] in CH₂Cl₂**

| *δ*, ppm | Multiplizität | *J* / Hz | Zuordnung |
|---|---|---|---|
| 24,3 | dec, t | ²*J*_{(PCH3)} = 13 | [(CH₃)₂NCH₂**P**(CH₃)₃]⁺ |
| | | ²*J*_{(PCH2)} = 4 | |
| | | ¹J_{(PC)} = 54 | |
| -154,1 | d, t, quin, t | ¹*J*_{(PH)} = 678 | [P(C₂F₅)₃F₂H]⁻ |
| | | ¹*J*_{(PF)} = 728 | |
| | | ²*J*_{(*P*Ftrans)} = 105 | |
| | | ²*J*_{(PF*cis*)} = 93 | |

**Tabelle 13.2.: ¹⁹F-NMR-Daten von [(CH₃)₂NCH₂P(CH₃)₃] [P(C₂F₅)₃F₂H] in CH₂Cl₂**

| *δ*, ppm | Multiplizität | *J* / Hz | Zuordnung | Integral |
|---|---|---|---|---|
| -80,8 | m | - | *trans*-C**F**₃ | 3 |
| -82,0 | m | - | *cis*-C**F**₃ | 6 |
| -113,9 | d, d, m | ¹*J*_{(PF)} = 730 | P**F** | 2 |
| | | ²*J*_{(FH)} = 63 | | |
| -119,2 | d, m | ²*J*_{(PF*trans*)} = 105 | *trans*-C**F**₂ | 2 |
| -125,7 | d, m | ²*J*_{(PF*cis*)} = 93 | *cis*-C**F**₂ | 4 |

**Tabelle 13.3.: ¹H-NMR-Daten von [(CH₃)₂NCH₂P(CH₃)₃][P(C₂F₅)₃F₂H] in CH₂Cl₂**

| *δ*, ppm | Multiplizität | *J* / Hz | Zuordnung | Integral |
|---|---|---|---|---|
| 1,8 | d | ²*J*_{(PH)} = 14 | [(CH₃)₂NCH₂P(CH₃)₃]⁺ | 9 |
| 2,4 | s | - | [(CH₃)₂NCH₂P(CH₃)₃]⁺ | 6 |
| 3,3 | d | ²*J*_{(PH)} = 5 | [(CH₃)₂NCH₂P(CH₃)₃]⁺ | 2 |

**Tabelle 13.4.: ¹³C{¹H}-NMR-Daten von [(CH₃)₂NCH₂P(CH₃)₃] [P(C₂F₅)₃F₂H] in CH₂Cl₂**

| *δ*, ppm | Multiplizität | *J* / Hz | Zuordnung |
|---|---|---|---|
| 6,5 | d | ¹*J*_{(PC)} = 54 | [(CH₃)₂NCH₂P(CH₃)₃]⁺ |
| 47,6 | d | ³*J*_{(PC)} = 7 | [(CH₃)₂NCH₂P(CH₃)₃]⁺ |
| 51,6 | s (br) | - | N(CH₃)₃ |
| 52,9 | d | ¹*J*_{(PC)} = 7 | [(CH₃)₂NCH₂P(CH₃)₃]⁺ |

## Patentansprüche

1. Verfahren zur Herstellung einer Verbindung der Formel (1)
[Kt]^{x+}[(CₙF₂ₙ₊₁)_{z}PF_{5-z}H]⁻ ₓ (1)
worin [Kt]^{x+} ein anorganisches oder organisches Kation ist,
wobei in einem Schritt eine Verbindung der Formel (2)
(CₙF₂ₙ₊₁)_{z}PF_{5-z} (2)
mit einem Hydridionen-Donator umgesetzt wird,
und wobei optional ein zweiter Schritt erfolgen kann falls [Kt]^{x+} ein organisches Kation ist, in dem das Produkt aus dem ersten Schritt mit einer Verbindung der Formel (3) umgesetzt wird
[Kt]^{x+} [X]⁻ ₓ (3),
worin [Kt]^{x+} für ein organisches Kation und [X]⁻ für ein hydrophiles Anion stehen,
worin n = 1-8, x = 1-4 und z = 1-4 sind.

2. Verfahren nach Anspruch 1, **dadurch gekennzeichnet, dass** der Hydridionen-Donator ausgewählt ist aus der Gruppe umfassend Metallhydride, Borhydride, Hydridoborate, Hydridoaluminate und tertiäre und sekundäre Amine.

3. Verfahren nach Anspruch 2, **dadurch gekennzeichnet, dass** der Hydridionen-Donator LiAlH₄ ist.

4. Verfahren nach Anspruch 2, **dadurch gekennzeichnet, dass** der Hydridionen-Donator ein tertiäres oder sekundäres Amin der Formel (11) ist
R¹⁴₂N-CH₂R¹⁵ (11),
wobei
R¹⁴ und R¹⁵ bei jedem Auftreten unabhängig voneinander
- H, wobei maximal ein Substituent R¹⁴ H sein darf,
- geradkettiges oder verzweigtes Alkyl mit 1-20 C-Atomen,
- geradkettiges oder verzweigtes Alkenyl mit 2-20 C-Atomen und einer oder mehreren Doppelbindungen,
- geradkettiges oder verzweigtes Alkinyl mit 2-20 C-Atomen und einer oder mehreren Dreifachbindungen,
- gesättigtes, teilweise oder vollständig ungesättigtes Cycloalkyl mit 3-7 C-Atomen, das mit Alkylgruppen mit 1-6 C-Atomen, substituiert sein kann,
bedeutet,
wobei R¹⁵ auch Cl oder F sein kann,
wobei R¹⁵ vollständig mit Fluor und/ oder ein oder mehrere R¹⁴ und/oder R¹⁵ teilweise mit Halogenen oder teilweise mit -OR^{1*}, -NR^{1*}₂, -CN, -C(O)NR^{1*}₂ oder -SO₂NR^{1*}₂ substituiert sein können,
und wobei ein oder zwei nicht benachbarte und nicht α-ständige Kohlenstoffatome der Reste R¹⁴ und/oder R¹⁵ durch Atome und/ oder Atomgruppierungen ausgewählt aus der Gruppe -O-, -S-, -S(O)-, -SO₂-, -N⁺R^{1*}₂-, -C(O)NR^{1*}-, -SO₂NR^{1*} - oder -P(O)R^{1*} - ersetzt sein können; worin R^{1*} für nicht oder teilweise fluoriertes C₁- bis C₆-Alkyl, C₃- bis C₇-Cycloalkyl, unsubstituiertes oder substituiertes Phenyl stehen.

5. Verfahren nach einem oder mehreren der Ansprüche 1 bis 4, **dadurch gekennzeichnet, dass** z für 2 oder 3 steht.

6. Verfahren nach einem oder mehreren der Ansprüche 1 bis 3 und 5, **dadurch gekennzeichnet, dass** [Kt]^{x+} ein Metallkation ist.

7. Verfahren nach einem oder mehreren der Ansprüche 1 bis 5, **dadurch gekennzeichnet, dass** [Kt]^{x+} ein organisches Kation ist.

8. Verfahren nach Anspruch 7, **dadurch gekennzeichnet, dass** das Kation [Kt]^{x+} ausgewählt ist aus der Gruppe umfassend Ammonium-, Phosphonium-, Uronium-, Thiouronium-, Sulfonium-, Oxonium-, Guanidiniumkationen, heterocyclische Kationen und Iminium-Kationen,
wobei Ammoniumkationen durch die allgemeine Formel (4)
[NR₄]⁺ (4)
gegeben sind, wobei
R jeweils unabhängig voneinander
- H,
- geradkettiges oder verzweigtes Alkyl mit 1-20 C-Atomen,
- geradkettiges oder verzweigtes Alkenyl mit 2-20 C-Atomen und einer oder mehreren Doppelbindungen,
- geradkettiges oder verzweigtes Alkinyl mit 2-20 C-Atomen und einer oder mehreren Dreifachbindungen,
- gesättigtes, teilweise oder vollständig ungesättigtes Cycloalkyl mit 3-7 C-Atomen, das mit Alkylgruppen mit 1-6 C-Atomen substituiert sein kann,
bedeutet,
wobei ein R vollständig mit Fluor und/ oder ein oder mehrere R teilweise mit Halogenen oder teilweise mit -OR¹, -NR^{1*}₂, -CN, -C(O)NR¹₂ oder -SO₂NR¹₂ substituiert sein können,
und wobei ein oder zwei nicht benachbarte und nicht α-ständige Kohlenstoffatome des Restes R durch Atome und/ oder Atomgruppierungen ausgewählt aus der Gruppe -O-, -S-, -S(O)-, -SO₂-, - N⁺R¹₂-, -C(O)NR¹-, -SO₂NR¹- oder -P(O)R¹-ersetzf sein können;
wobei Phosphoniumkationen durch die allgemeine Formel (5)
[PR²₄]⁺ (5)
gegeben sind, wobei
R² jeweils unabhängig voneinander
- H wobei nicht alle Substituenten R² gleichzeitig H sein dürfen, NR¹₂,
- geradkettiges oder verzweigtes Alkyl mit 1-20 C-Atomen,
- geradkettiges oder verzweigtes Alkenyl mit 2-20 C-Atomen und einer oder mehreren Doppelbindungen,
- geradkettiges oder verzweigtes Alkinyl mit 2-20 C-Atomen und einer oder mehreren Dreifachbindungen,
- gesättigtes, teilweise oder vollständig ungesättigtes Cycloalkyl mit 3-7 C-Atomen, das mit Alkylgruppen mit 1-6 C-Atomen substituiert sein kann,
bedeutet,
wobei ein R² vollständig mit Fluor und/oder ein oder mehrere R² teilweise mit Halogenen, oder teilweise mit -OR¹, -CN, -C(O)NR¹₂, -SO₂NR¹₂ substituiert sein können,
und wobei ein oder zwei nicht benachbarte und nicht α-ständige Kohlenstoffatome des R², durch Atome und/ oder Atomgruppierungen ausgewählt aus der Gruppe -O-, -S-, -S(O)-, -SO₂-, -N⁺R¹₂-, -C(O)NR¹-, -SO₂NR¹-, oder -P(O)R¹- ersetzt sein können;
wobei Uroniumkationen durch die allgemeine Formel (6)
[C(NR³R⁴)(OR⁵)(NR⁶R⁷)]⁺ (6)
und wobei Thiouroniumkationen durch die allgemeine Formel (7)
[C(NR³R⁴)(SR⁵)(NR⁶R⁷)]⁺ (7)
gegeben sind, wobei
R³ bis R⁷ jeweils unabhängig voneinander
- H, NR^{1*}₂,
- geradkettiges oder verzweigtes Alkyl mit 1 bis 20 C-Atomen,
- geradkettiges oder verzweigtes Alkenyl mit 2-20 C-Atomen und einer oder mehreren Doppelbindungen,
- geradkettiges oder verzweigtes Alkinyl mit 2-20 C-Atomen und einer oder mehreren Dreifachbindungen,
- gesättigtes, teilweise oder vollständig ungesättigtes Cycloalkyl mit 3-7 C-Atomen, das mit Alkylgruppen mit 1-6 C-Atomen substituiert sein kann,
bedeuten,
wobei ein oder mehrere der Substituenten R³ bis R⁷ teilweise mit Halogenen, oder mit -OH, -OR¹, -CN, -C(O)NR¹₂, -SO₂NR¹₂ substituiert sein können,
und wobei ein oder zwei nicht benachbarte und nicht α-ständige Kohlenstoffatome von R³ bis R⁷ durch Atome und/ oder Atomgruppierungen ausgewählt aus der Gruppe -O-, -S-, -S(O)-, -SO₂-, -N⁺R¹₂-, -C(O)NR¹-, -SO₂NR¹-, oder -P(O)R¹- ersetzt sein können;
wobei Sulfoniumkationen durch die allgemeine Formel (12)
[(R^{o})₃S]⁺ (12)
gegeben sind, wobei
R^{o} steht für
- NR"'₂,
- geradkettiges oder verzweigtes Alkyl mit 1-8 C-Atomen,
- gesättigtes, teilweise oder vollständig ungesättigtes Cycloalkyl mit 3-7 C-Atomen, das mit Alkylgruppen mit 1-6 C-Atomen substituiert sein kann,
wobei ein oder mehrere der Substituenten R⁰ teilweise mit Halogenen oder mit -OR"', -CN oder -N(R'")₂ substituiert sein können;
wobei Oxoniumkationen durch die allgemeine Formel (13)
[(R^{o*})₃O]⁺ (13)
gegeben sind, wobei
R^{o*} steht für
- geradkettiges oder verzweigtes Alkyl mit 1-8 C-Atomen,
- gesättigtes, teilweise oder vollständig ungesättigtes Cycloalkyl mit 3-7 C-Atomen, das mit Alkylgruppen mit 1-6 C-Atomen substituiert sein kann,
wobei ein oder mehrere der Substituenten R^{0*} teilweise mit Halogenen oder mit -OR"', -CN oder -N(R"')₂ substituiert sein können;
wobei Guanidiniumkationen durch die allgemeine Formel (8)
[C(NR⁸R⁹)(NR¹⁰R¹¹)(NR¹²R¹³)]⁺ (8)
gegeben sind, wobei
R⁸ bis R¹³ jeweils unabhängig voneinander
- H, NR^{1*}₂,
- geradkettiges oder verzweigtes Alkyl mit 1 bis 20 C-Atomen,
- geradkettiges oder verzweigtes Alkenyl mit 2-20 C-Atomen und einer oder mehreren Doppelbindungen,
- geradkettiges oder verzweigtes Alkinyl mit 2-20 C-Atomen und einer oder mehreren Dreifachbindungen,
- gesättigtes, teilweise oder vollständig ungesättigtes Cycloalkyl mit 3-7 C-Atomen, das mit Alkylgruppen mit 1-6 C-Atomen substituiert sein kann,
bedeuten,
wobei ein oder mehrere der Substituenten R⁸ bis R¹³ teilweise mit Halogenen oder mit-OR¹, -CN, -C(O)NR¹₂, -SO₂NR¹₂ substituiert sein können,
und wobei ein oder zwei nicht benachbarte und nicht α-ständige Kohlenstoffatome von R⁸ bis R¹³ durch Atome und/oder Atomgruppierungen ausgewählt aus der Gruppe -O-, -S-, -S(O)-, -SO₂-, -N⁺R¹₂-, -C(O)NR¹-, -SO₂NR¹-, oder -P(O)R¹- ersetzt sein können;
wobei heterozyklische Kationen durch die allgemeine Formel (9)
[HetN]⁺ (9)
gegeben sind,
wobei [HetN]⁺ ein heterocyclisches Kation ist, ausgewählt aus der Gruppe umfassend 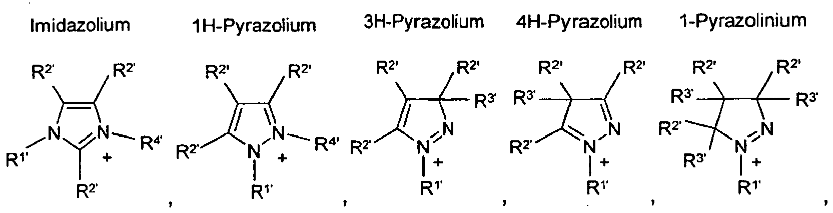 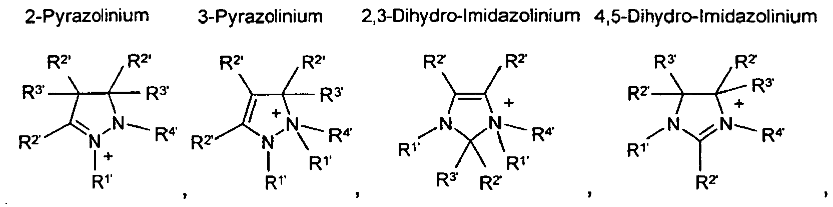 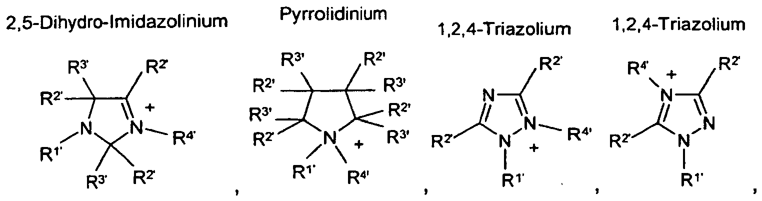 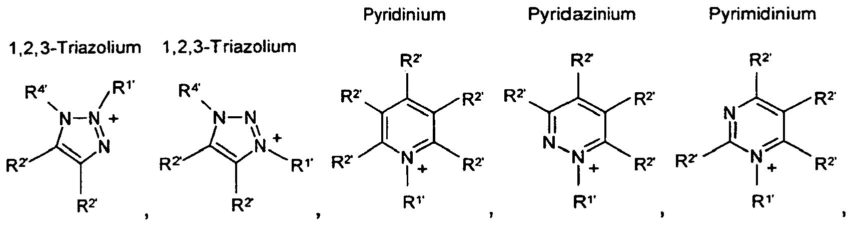 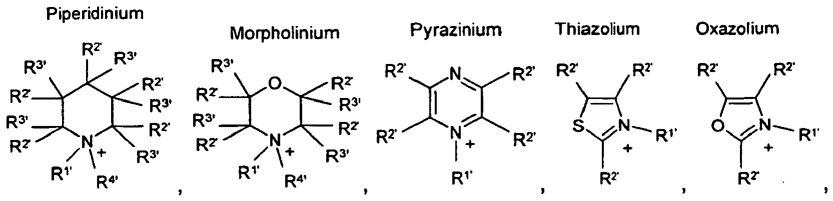 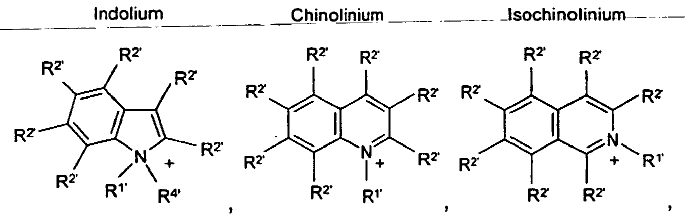 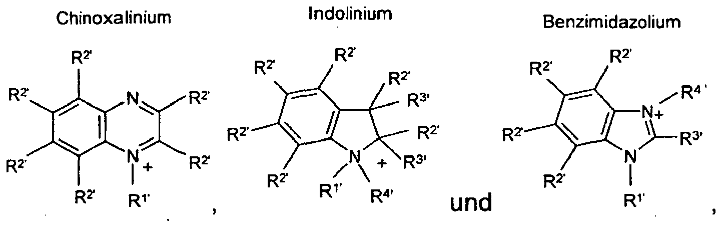 wobei die Substituenten R^{1'} bis R^{4'} jeweils unabhängig voneinander
- H,
- geradkettiges oder verzweigtes Alkyl mit 1-20 C-Atomen,
- geradkettiges oder verzweigtes Alkenyl mit 2-20 C-Atomen und einer oder mehreren Doppelbindungen,
- geradkettiges oder verzweigtes Alkinyl mit 2-20 C-Atomen und einer oder mehreren Dreifachbindungen,
- gesättigtes, teilweise oder vollständig ungesättigtes Cycloalkyl mit 3-7 C-Atomen, das mit Alkylgruppen mit 1-6 C-Atomen substituiert sein kann,
- gesättigtes, teilweise oder vollständig ungesättigtes Heteroaryl, Heteroaryl-C₁-C₆-alkyl oder Aryl-C₁-C₆-alkyl,
bedeuten,
wobei die Substituenten R^{1'}, R², R^{3'} und/oder R^{4'} zusammen ein Ringsystem bilden können,
wobei ein oder mehrere Substituenten R^{1'} bis R^{4'} teilweise oder vollständig mit Halogenen oder teilweise mit -OR¹, -CN, -C(O)NR¹₂, -SO₂NR¹₂ substituiert sein können, wobei jedoch nicht gleichzeitig R^{1'} und R^{4'} vollständig mit Halogenen substituiert sein dürfen, und wobei ein oder zwei nicht benachbarte und nicht am Heteroatom gebundene Kohlenstoffatome der Substituenten R^{1'} bis R^{4'}, durch Atome und/oder Atomgruppierungen ausgewählt aus der Gruppe -O-, -S-, -S(O)-, -SO₂-, -N⁺R¹₂-, -C(O)NR¹-, -SO₂NR¹-, oder -P(O)R¹- ersetzt sein können;
wobei Iminiumkationen durch die allgemeine Formel (10)
[R¹⁴₂N=CHR¹⁵]⁺ (10)
gegeben sind, wobei
R¹⁴ und R¹⁵ bei jedem Auftreten unabhängig voneinander
- H, wobei maximal ein Substituent R¹⁴ H sein darf,
- geradkettiges oder verzweigtes Alkyl mit 1-20 C-Atomen,
- geradkettiges oder verzweigtes Alkenyl mit 2-20 C-Atomen und einer oder mehreren Doppelbindungen,
- geradkettiges oder verzweigtes Alkinyl mit 2-20 C-Atomen und einer oder mehreren Dreifachbindungen,
- gesättigtes, teilweise oder vollständig ungesättigtes Cycloalkyl mit 3-7 C-Atomen, das mit Alkylgruppen mit 1-6 C-Atomen substituiert sein kann,
bedeutet,
wobei R¹⁵ auch für Cl oder F stehen kann,
wobei R¹⁵ vollständig mit Fluor und/ oder ein oder mehrere R¹⁴ und/oder R¹⁵ teilweise mit Halogenen oder teilweise mit -OR^{1*}, -NR^{1*}₂, -CN, -C(O)NR^{1*}₂ oder -SO₂NR^{1*}₂ substituiert sein können,
und wobei ein oder zwei nicht benachbarte und nicht α-ständige Kohlenstoffatome des Restes R¹⁴ und/oder R¹⁵ durch Atome und/ oder Atom-gruppierungen ausgewählt aus der Gruppe -O-, -S-, -S(O)-, -SO₂-, -N⁺R^{1*}₂-, -C(O)NR^{1*}-, -SO₂NR^{1*} - oder -P(O)R^{1*}- ersetzt sein können;
worin R¹ für H, nicht oder teilweise fluoriertes C₁- bis C₆-Alkyl, C₃- bis C₇-Cycloalkyl, unsubstituiertes oder substituiertes Phenyl, R^{1*} für nicht oder teilweise fluoriertes C₁- bis C₆-Alkyl, C₃- bis C₇-Cycloalkyl, unsubstituiertes oder substituiertes Phenyl und R"' für ein geradkettiges oder verzweigtes C₁-C₈-Alkyl stehen.

9. Verfahren nach einem oder mehreren der Ansprüche 1 bis 8, **dadurch gekennzeichnet, dass** die Umsetzung im ersten Schritt bei -80 bis 50°C erfolgt.

10. Verwendung einer Verbindung der Formel (1) nach Anspruch 1, wobei [Kt]^{x+} ein anorganisches Kation ist, zur Herstellung einer Verbindung der Formel (1) nach Anspruch 1, wobei [Kt]^{x+} ein organisches Kation ist.

11. Verwendung einer Verbindung der Formel (1) nach Anspruch 1, wobei [Kt]^{x+} ein organisches Kation ist, als Lösungsmittel oder Lösungsmittelzusatz, als Phasentransferkatalysator, als Wärmeträger, als oberflächenaktive Substanz, als Weichmacher, als Flammschutzmittel, als Leitsalz oder als Extraktionsmittel in Stofftrennverfahren.

12. Verwendung einer Verbindung der Formel (1) nach Anspruch 1, wobei [Kt]^{x+} ein organisches Kation ist, in elektrochemischen Anwendungen, Batterien, Sensoren, Kondensatoren, Kapazitoren, Solarzellen und Farbstoffsolarzellen.

13. Verbindung der Formel (1)
[Kt]^{x+} [(CₙF₂ₙ₊₁)_{z}PF_{5-z}H]⁻ₓ (1)
worin [Kt]^{x+} ein anorganisches oder organisches Kation ist,
mit n = 1-8, x = 1-4 und z = 1-4,
wobei die Verbindungen [(CF₃)₂PF₃H]⁻ K⁺, [(CF₃)₂PF₃H]⁻[(CH₃)₂NH₂]⁺, [(CF₃)PF₄H]⁻ K⁺ und [(CF₃)PF₄H]⁻ [(CH₃)₂NH₂]⁺ ausgeschlossen sind.

14. Verbindung nach Anspruch 13, **dadurch gekennzeichnet, dass** [Kt]^{x+} ein Metallkation ist.

15. Verbindung nach Anspruch 13, **dadurch gekennzeichnet, dass** [Kt]^{x+} ein organisches Kation ist.

16. Verfahren zur Isolierung hydrophober Verbindungen, **dadurch gekennzeichnet, dass** eine Verbindung der Formel (1) nach Anspruch 1, worin [Kt]^{x+} für ein organisches Kation steht, durch Hydrolyse in eine Verbindung enthaltend ein [(CₙF₂ₙ₊₁)₂P(O)O]⁻ oder [(CₙF₂ₙ₊₁)P(O)O₂]⁻² Anion überführt wird.

## Claims

1. Process for the preparation of a compound of the formula (1)
[Kt]^{x+}[(CₙF₂ₙ₊₁)_{z}PF_{5-z}H]⁻ₓ (1)
in which [Kt]^{x+} is an inorganic or organic cation,
where, in one step, a compound of the formula (2)
(CₙF₂ₙ₊₁)_{z}PF_{5-z} (2)
is reacted with a hydride ion donor,
and where, if [Kt]^{x+} is an organic cation, a second step can optionally be carried out in which the product from the first step is reacted with a compound of the formula (3)
[Kt]^{x+}[X]⁻ ₓ (3),
in which [Kt]^{x+} stands for an organic cation and [X]⁻ stands for a hydrophilic anion,
in which n = 1-8, x = 1-4 and z = 1-4.

2. Process according to Claim 1, **characterised in that** the hydride ion donor is selected from the group comprising metal hydrides, borohydrides, hydridoborates, hydridoaluminates and tertiary and secondary amines.

3. Process according to Claim 2, **characterised in that** the hydride ion donor is LiAlH₄.

4. Process according to Claim 2, **characterised in that** the hydride ion donor is a tertiary or secondary amine of the formula (11)
R¹⁴₂N-CH₂R¹⁵ (11),
where
R¹⁴ and R¹⁵ on each occurrence, independently of one another, denote
- H, where a maximum of one substituent R¹⁴ can be H,
- straight-chain or branched alkyl having 1-20 C atoms,
- straight-chain or branched alkenyl having 2-20 C atoms and one or more double bonds,
- straight-chain or branched alkynyl having 2-20 C atoms and one or more triple bonds,
- saturated, partially or fully unsaturated cycloalkyl having 3-7 C atoms, which may be substituted by alkyl groups having 1-6 C atoms,
where R¹⁵ may also be Cl or F,
where R¹⁵ may be fully substituted by fluorine and/or one or more R¹⁴ and/or R¹⁵ may be partially substituted by halogens or partially substituted by -OR^{1*}, -NR^{1*}₂, -CN, -C(O)NR^{1*}₂ or -SO₂NR^{1*}₂,
and where one or two non-adjacent carbon atoms which are not in the α-position of the radicals R¹⁴ and/or R¹⁵ may be replaced by atoms and/or atom groups selected from the group -O-, -S-, -S(O)-, -SO₂-, -N⁺R^{1*}₂-, -C(O)NR^{1*}-, -SO₂NR^{1*}- or -P(O)R^{1*}-;
in which R^{1*} stands for non- or partially fluorinated C₁- to C₆-alkyl, C₃- to C₇-cycloalkyl, unsubstituted or substituted phenyl.

5. Process according to one or more of Claims 1 to 4, **characterised in that** z stands for 2 or 3.

6. Process according to one or more of Claims 1 to 3 and 5, **characterised in that** [Kt]^{x+} is a metal cation.

7. Process according to one or more of Claims 1 to 5, **characterised in that** [Kt]^{x+} is an organic cation.

8. Process according to Claim 7, **characterised in that** the cation [Kt]^{x+} is selected from the group comprising ammonium, phosphonium, uronium, thiouronium, sulfonium, oxonium, guanidinium cations, heterocyclic cations and iminium cations,
where ammonium cations are given by the general formula (4)
[NR₄]⁺ (4),
where
R in each case, independently of one another, denotes
- H,
- straight-chain or branched alkyl having 1-20 C atoms,
- straight-chain or branched alkenyl having 2-20 C atoms and one or more double bonds,
- straight-chain or branched alkynyl having 2-20 C atoms and one or more triple bonds,
- saturated, partially or fully unsaturated cycloalkyl having 3-7 C atoms, which may be substituted by alkyl groups having 1-6 C atoms,
where one R may be fully substituted by fluorine and/or one or more R may be partially substituted by halogens or partially substituted by -OR¹, -NR^{1*}₂, -CN, -C(O)NR¹₂ or -SO₂NR¹₂,
and where one or two non-adjacent carbon atoms which are not in the α-position of the radical R may be replaced by atoms and/or atom groups selected from the group -O-, -S-, -S(O)-, -SO₂-, -N⁺R¹₂-, -C(O)NR¹-, -SO₂NR¹- or -P(O)R¹-;
where phosphonium cations are given by the general formula (5)
[PR²₄]⁺ (5),
where
R² in each case, independently of one another, denotes
- H, where all substituents R² cannot simultaneously be H, NR¹₂,
- straight-chain or branched alkyl having 1-20 C atoms,
- straight-chain or branched alkenyl having 2-20 C atoms and one or more double bonds,
- straight-chain or branched alkynyl having 2-20 C atoms and one or more triple bonds,
- saturated, partially or fully unsaturated cycloalkyl having 3-7 C atoms, which may be substituted by alkyl groups having 1-6 C atoms,
where one R² may be fully substituted by fluorine and/or one or more R² may be partially substituted by halogens or partially substituted by -OR¹, -CN, -C(O)NR¹₂, -SO₂NR¹₂,
and where one or two non-adjacent carbon atoms which are not in the α-position of the R² may be replaced by atoms and/or atom groups selected from the group -O-, -S-, -S(O)-, -SO₂-, -N⁺R¹₂-, -C(O)NR¹-, -SO₂NR¹- or -P(O)R¹-;
where uronium cations are given by the general formula (6)
[C(NR³R⁴)(OR⁵)(NR⁶R⁷)]⁺ (6)
and where thiouronium cations are given by the general formula (7)
[C(NR³R⁴)(SR⁵)(NR⁶R⁷)]⁺ (7),
where
R³ to R⁷ each, independently of one another, denote
- H, NR^{1*}₂,
- straight-chain or branched alkyl having 1 to 20 C atoms,
- straight-chain or branched alkenyl having 2-20 C atoms and one or more double bonds,
- straight-chain or branched alkynyl having 2-20 C atoms and one or more triple bonds,
- saturated, partially or fully unsaturated cycloalkyl having 3-7 C atoms, which may be substituted by alkyl groups having 1-6 C atoms,
where one or more of the substituents R³ to R⁷ may be partially substituted by halogens or by -OH, -OR¹, -CN, -C(O)NR¹₂, -SO₂NR¹₂,
and where one or two non-adjacent carbon atoms which are not in the α-position of R³ to R⁷ may be replaced by atoms and/or atom groups selected from the group -O-, -S-, -S(O)-, -SO₂-, -N⁺R¹₂-, -C(O)NR¹-, -SO₂NR¹- or -P(O)R¹-;
where sulfonium cations are given by the general formula (12)
[(R^{o})₃S]⁺ (12),
where
R^{o} stands for
- NR"'₂,
- straight-chain or branched alkyl having 1-8 C atoms,
- saturated, partially or fully unsaturated cycloalkyl having 3-7 C atoms, which may be substituted by alkyl groups having 1-6 C atoms,
where one or more of the substituents R^{o} may be partially substituted by halogens or by -OR"', -CN or -N(R"')₂;
where oxonium cations are given by the general formula (13)
[(R^{o*})₃O]⁺ (13),
where
R^{o*} stands for
- straight-chain or branched alkyl having 1-8 C atoms,
- saturated, partially or fully unsaturated cycloalkyl having 3-7 C atoms, which may be substituted by alkyl groups having 1-6 C atoms,
where one or more of the substituents R^{o*} may be partially substituted by halogens or by -OR"', -CN or -N(R"')₂;
where guanidinium cations are given by the general formula (8)
[C(NR⁸R⁹)(NR¹⁰R¹¹)(NR¹²R¹³)] (8),
where
R⁸ to R¹³ each, independently of one another, denote
- H, NR^{1*}₂,
- straight-chain or branched alkyl having 1 to 20 C atoms,
- straight-chain or branched alkenyl having 2-20 C atoms and one or more double bonds,
- straight-chain or branched alkynyl having 2-20 C atoms and one or more triple bonds,
- saturated, partially or fully unsaturated cycloalkyl having 3-7 C atoms, which may be substituted by alkyl groups having 1-6 C atoms,
where one or more of the substituents R⁸ to R¹³ may be partially substituted by halogens or by -OR¹, -CN, -C(O)NR¹₂, -SO₂NR¹₂,
and where one or two non-adjacent carbon atoms which are not in the α-position of R⁸ to R¹³ may be replaced by atoms and/or atom groups selected from the group -O-, -S-, -S(O)-, -SO₂-, -N⁺R¹₂-, -C(O)NR¹-, -SO₂NR¹- or -P(O)R¹-;
where heterocyclic cations are given by the general formula (9)
[HetN]⁺ (9),
where [HetN]⁺ is a heterocyclic cation selected from the group comprising 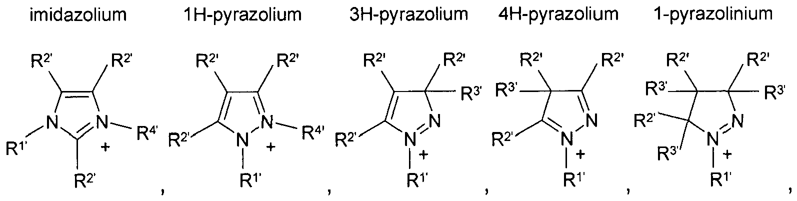 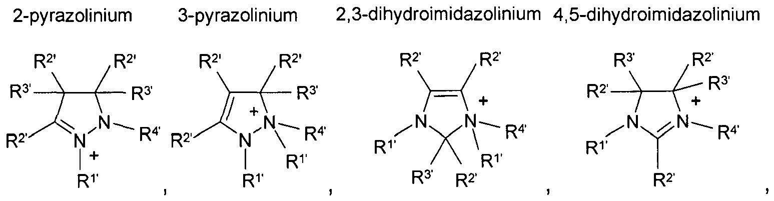 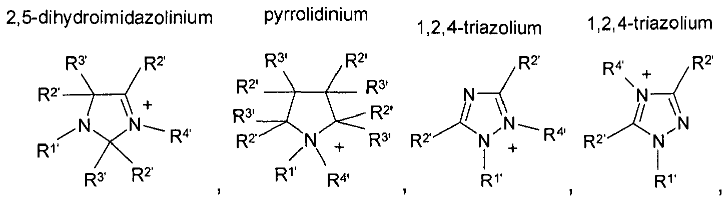 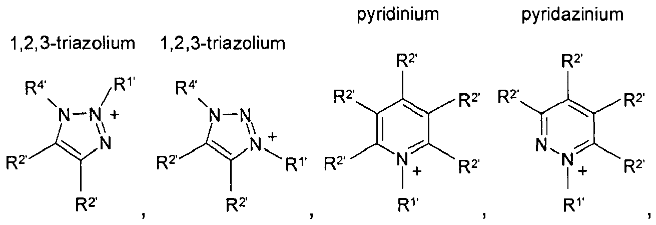 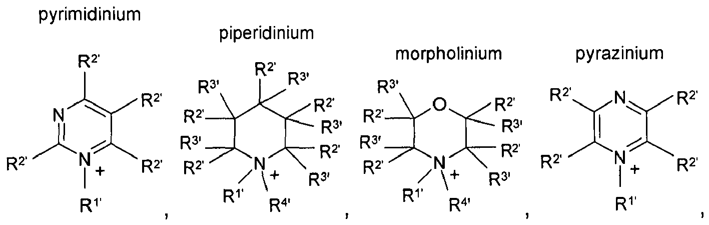 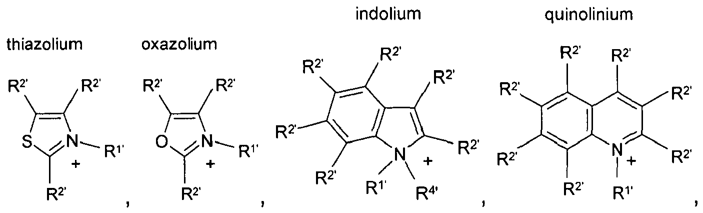 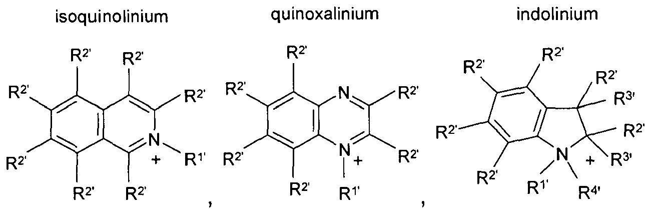 and 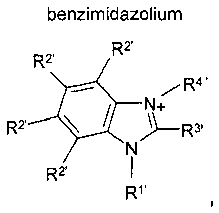 where the substituents R^{1'} to R^{4'} each, independently of one another, denote
- H,
- straight-chain or branched alkyl having 1-20 C atoms,
- straight-chain or branched alkenyl having 2-20 C atoms and one or more double bonds,
- straight-chain or branched alkynyl having 2-20 C atoms and one or more triple bonds,
- saturated, partially or fully unsaturated cycloalkyl having 3-7 C atoms, which may be substituted by alkyl groups having 1-6 C atoms,
- saturated, partially or fully unsaturated heteroaryl, heteroaryl-C₁-C₆-alkyl or aryl-C₁-C₆-alkyl,
where the substituents R^{1'}, R^{2'}, R^{3'} and/or R^{4'} together may form a ring system,
where one or more substituents R^{1'} to R^{4'} may be partially or fully substituted by halogens or partially substituted by -OR¹, -CN, -C(O)NR¹₂, -SO₂NR¹₂, but where r^{1'} and R^{4'} cannot simultaneously be fully substituted by halogens, and where one or two non-adjacent carbon atoms which are not bonded to the heteroatom of the substituents r^{1'} to R^{4'} may be replaced by atoms and/or atom groups selected from the group -O-, -S-, -S(O)-, -SO₂-, -N⁺R¹₂-, -C(O)NR¹-, -SO₂NR¹- or -P(O)R¹-;
where iminium cations are given by the general formula (10)
[R¹⁴₂N=CHR¹⁵]⁺ (10),
where
R¹⁴ and R¹⁵ on each occurrence, independently of one another, denote
- H, where a maximum of one substituent R¹⁴ can be H,
- straight-chain or branched alkyl having 1-20 C atoms,
- straight-chain or branched alkenyl having 2-20 C atoms and one or more double bonds,
- straight-chain or branched alkynyl having 2-20 C atoms and one or more triple bonds,
- saturated, partially or fully unsaturated cycloalkyl having 3-7 C atoms, which may be substituted by alkyl groups having 1-6 C atoms,
where R¹⁵ may also stand for Cl or F,
where R¹⁵ may be fully substituted by fluorine and/or one or more R¹⁴ and/or R¹⁵ may be partially substituted by halogens or partially substituted by -OR^{1*}, -NR^{1*}₂, -CN, -C(O)NR^{1*}₂ or -SO₂NR^{1*}₂,
and where one or two non-adjacent carbon atoms which are not in the α-position of the radical R¹⁴ and/or R¹⁵ may be replaced by atoms and/or atom groups selected from the group -O-, -S-, -S(O)-, -SO₂-, -N⁺R^{1*}₂-, -C(O)NR^{1*}-, -SO₂NR^{1*}- or -P(O)R^{1*}-;
in which R¹ stands for H, non- or partially fluorinated C₁- to C₆-alkyl, C₃-to C₇-cycloalkyl, unsubstituted or substituted phenyl, R^{1*} stands for non- or partially fluorinated C₁- to C₆-alkyl, C₃- to C₇-cycloalkyl, unsubstituted or substituted phenyl, and R'" stands for a straight-chain or branched C₁-C₈-alkyl.

9. Process according to one or more of Claims 1 to 8, **characterised in that** the reaction in the first step is carried out at -80 to 50°C.

10. Use of a compound of the formula (1) according to Claim 1 in which [Kt]^{x+} is an inorganic cation for the preparation of a compound of the formula (1) according to Claim 1 in which [Kt]^{x+} is an organic cation.

11. Use of a compound of the formula (1) according to Claim 1 in which [Kt]^{x+} is an organic cation as solvent or solvent additive, as phase-transfer catalyst, as heat-exchange medium, as surface-active substance, as plasticiser, as flameproofing agent, as conductive salt or as extractant in substance separation processes.

12. Use of a compound of the formula (1) according to Claim 1 in which [Kt]^{x+} is an organic cation in electrochemical applications, batteries, sensors, capacitors, solar cells and dye solar cells.

13. Compound of the formula (1)
[Kt]^{x+}[(CₙF₂ₙ₊₁)_{z}PF_{5-z}H]⁻ₓ (1)
in which [Kt]^{x+} is an inorganic or organic cation,
where n = 1-8, x = 1-4 and z = 1-4,
where the compounds [(CF₃)₂PF₃H]⁻ K⁺, [(CF₃)₂PF₃H]⁻ [(CH₃)₂NH₂]⁺, [(CF₃)PF₄H]⁻ K⁺ and [(CF₃)PF₄H]⁻[(CH₃)₂NH₂]⁺ are excluded.

14. Compound according to Claim 13, **characterised in that** [Kt]^{x+} is a metal cation.

15. Compound according to Claim 13, **characterised in that** [Kt]^{x+} is an organic cation.

16. Process for the isolation of hydrophobic compounds, **characterised in that** a compound of the formula (1) according to Claim 1 in which [Kt]^{x+} stands for an organic cation is converted into a compound containing a [(CₙF₂ₙ₊₁)₂P(O)O]⁻ or [(CₙF₂ₙ₊₁)P(O)O₂]⁻² anion by hydrolysis.

## Revendications

1. Procédé de préparation d'un composé de formule (1)
[Kt]^{x+} [(CₙF₂ₙ₊₁)_{z}PF_{5-z}H]⁻ₓ (1)
dans laquelle [Kt]^{x+} est un cation inorganique ou organique,
où, dans une étape, un composé de formule (2)
(CₙF₂ₙ₊₁)_{z}PF_{5-z} (2)
est réagi avec un donneur d'ion hydrure,
et où, si [Kt]^{x+} est un cation organique, une deuxième étape peut éventuellement être effectuée, dans laquelle le produit issu de la première étape est réagi avec un composé de formule (3)
[Kt]^{x+} [X]⁻ₓ (3),
dans laquelle [Kt]^{x+} représente un cation organique et [X]⁻ représente un anion hydrophile,
où n = 1-8, x = 1-4 et z = 1-4.

2. Procédé selon la revendication 1, **caractérisé en ce que** le donneur d'ion hydrure est choisi dans le groupe constitué par les hydrures métalliques, les borohydrures, les hydruroborates, les hydruroaluminates et les amines tertiaires et secondaires.

3. Procédé selon la revendication 2, **caractérisé en ce que** le donneur d'ion hydrure est LiAlH₄.

4. Procédé selon la revendication 2, **caractérisé en ce que** le donneur d'ion hydrure est une amine tertiaire ou secondaire de formule (11)
R¹⁴₂N-CH₂R¹⁵ (11),
dans laquelle
R¹⁴ et R¹⁵ désignent à chaque occurrence, indépendamment l'un de l'autre,
- H, où un maximum d'un substituant R¹⁴ peut être H,
- alkyle à chaîne linéaire ou ramifiée ayant 1-20 atomes de C,
- alcényle à chaîne linéaire ou ramifiée ayant 2-20 atomes de C et une ou plusieurs doubles liaisons,
- alcynyle à chaîne linéaire ou ramifiée ayant 2-20 atomes de C et une ou plusieurs triples liaisons,
- cycloalkyle saturé, partiellement ou totalement insaturé ayant 3-7 atomes de C, pouvant être substitué par des groupements alkyle ayant 1-6 atomes de C,
où R¹⁵ peut également être Cl ou F,
où R¹⁵ peut être totalement substitué par fluor et/ou un ou plusieurs R¹⁴ et/ou R¹⁵ peuvent être partiellement substitués par des halogènes ou partiellement substitués par -OR^{1*}, -NR^{1*}₂, -CN, -C(O)NR^{1*}₂ ou -SO₂NR^{1*}₂,
et où un ou deux atomes de carbone non adjacents qui ne sont pas en position α par rapport aux radicaux R¹⁴ et/ou R¹⁵ peuvent être remplacés par des atomes et/ou des groupes d'atomes choisis dans le groupe constitué par -O-, -S-, -S(O)-, -SO₂-, -N⁺R^{1*}₂-, -C(O)NR^{1*}-, -SO₂NR^{1*}- ou -P(O)R^{1*}-;
où R^{1*} représente C₁- à C₆-alkyle, C₃- à C₇-cycloalkyle non ou partiellement fluoré, phényle non substitué ou substitué.

5. Procédé selon l'une ou plusieurs parmi les revendications 1 à 4, **caractérisé en ce que** z représente 2 ou 3.

6. Procédé selon l'une ou plusieurs parmi les revendications 1 à 3 et 5, **caractérisé en ce que** [Kt]^{x+} est un cation métallique.

7. Procédé selon l'une ou plusieurs parmi les revendications 1 à 5, **caractérisé en ce que** [Kt]^{x+} est un cation organique.

8. Procédé selon la revendication 7, **caractérisé en ce que** le cation [Kt]^{x+} est choisi dans le groupe constitué par les cations ammonium, phosphonium, uronium, thiouronium, sulfonium, oxonium, guanidinium, les cations hétérocycliques et les cations iminium,
où les cations ammonium sont représentés par la formule générale (4)
[NR₄]⁺ (4),
dans laquelle
R désigne dans chaque cas, indépendamment l'un de l'autre,
- H,
- alkyle à chaîne linéaire ou ramifiée ayant 1-20 atomes de C,
- alcényle à chaîne linéaire ou ramifiée ayant 2-20 atomes de C et une ou plusieurs doubles liaisons,
- alcynyle à chaîne linéaire ou ramifiée ayant 2-20 atomes de C et une ou plusieurs triples liaisons,
- cycloalkyle saturé, partiellement ou totalement insaturé ayant 3-7 atomes de C, pouvant être substitué par des groupements alkyle ayant 1-6 atomes de C,
où un R peut être totalement substitué par fluor et/ou un ou plusieurs R peuvent être partiellement substitués par des halogènes ou partiellement substitués par -OR¹, -NR^{1*}₂, -CN, -C(O)NR¹₂ ou -SO₂NR¹₂,
et où un ou deux atomes de carbone non adjacents qui ne sont pas en position α par rapport au radical R peuvent être remplacés par des atomes et/ou des groupes d'atomes choisis dans le groupe constitué par -O-, -S-, -S(O)-, -SO₂-, -N⁺R¹₂-, -C(O)NR¹-, -SO₂NR¹- ou -P(O)R¹-;
où les cations phosphonium sont représentés par la formule générale (5)
[PR²₄]⁺ (5),
dans laquelle
R² dans chaque cas, indépendamment l'un de l'autre, désigne
- H, où tous les substituants R² ne peuvent pas être simultanément H, NR¹_{2,}
- alkyle à chaîne linéaire ou ramifiée ayant 1-20 atomes de C,
- alcényle à chaîne linéaire ou ramifiée ayant 2-20 atomes de C et une ou plusieurs doubles liaisons,
- alcynyle à chaîne linéaire ou ramifiée ayant 2-20 atomes de C et une ou plusieurs triples liaisons,
- cycloalkyle saturé, partiellement ou totalement insaturé ayant 3-7 atomes de C, pouvant être substitué par des groupements alkyle ayant 1-6 atomes de C,
où un R² peut être totalement substitué par fluor et/ou un ou plusieurs R² peuvent être partiellement substitués par des halogènes ou partiellement substitués par -OR¹, -CN, -C(O)NR¹₂, -SO₂NR¹₂,
et où un ou deux atomes de carbone non adjacents qui ne sont pas en position α par rapport à R² peuvent être remplacés par des atomes et/ou des groupes d'atomes choisis dans le groupe constitué par -O-, -S-, -S(O)-, -SO₂-, -N⁺R¹₂-, -C(O)NR¹-, -SO₂NR¹- ou -P(O)R¹-;
où les cations uronium sont représentés par la formule générale (6)
[C(NR³R⁴)(OR⁵)(NR⁶R⁷)]⁺ (6)
et où les cations thiouronium sont représentés par la formule générale (7)
[C(NR³R⁴)(SR⁵)(NR⁶R⁷)]⁺ (7),
dans laquelle
R³ à R⁷ désignent chacun, indépendamment les uns des autres,
- H, NR^{1*}₂,
- alkyle à chaîne linéaire ou ramifiée ayant 1 à 20 atomes de C,
- alcényle à chaîne linéaire ou ramifiée ayant 2-20 atomes de C et une ou plusieurs doubles liaisons,
- alcynyle à chaîne linéaire ou ramifiée ayant 2-20 atomes de C et une ou plusieurs triples liaisons,
- cycloalkyle saturé, partiellement ou totalement insaturé ayant 3-7 atomes de C, pouvant être substitué par des groupements alkyle ayant 1-6 atomes de C,
où un ou plusieurs parmi les substituants R³ à R⁷ peuvent être partiellement substitués par des halogènes ou par -OH, -OR¹, -CN, -C(O)NR¹₂, -SO₂NR¹₂,
et où un ou deux atomes de carbone non adjacents qui ne sont pas en position α par rapport à de R³ à R⁷ peuvent être remplacés par des atomes et/ou des groupes d'atomes choisis dans le groupe constitué par -O-, -S-, -S(O)-, -SO₂-, -N⁺R¹₂-, -C(O)NR¹-, -SO₂NR¹- ou -P(O)R¹-;
où les cations sulfonium sont représentés par la formule générale (12)
[(R^{o})₃S]⁺ (12),
dans laquelle
R^{o} représente
- NR"'₂,
- alkyle à chaîne linéaire ou ramifiée ayant 1-8 atomes de C,
- cycloalkyle saturé, partiellement ou totalement insaturé ayant 3-7 atomes de C, pouvant être substitué par des groupements alkyle ayant 1-6 atomes de C,
où un ou plusieurs parmi les substituants R^{o} peuvent être partiellement substitués par des halogènes ou par -OR"', -CN ou -N(R"')₂;
où les cations oxonium sont représentés par la formule générale (13)
[(R^{o*})₃O]⁺ (13),
dans laquelle
R^{o*} représente
- alkyle à chaîne linéaire ou ramifiée ayant 1-8 atomes de C,
- cycloalkyle saturé, partiellement ou totalement insaturé ayant 3-7 atomes de C, pouvant être substitué par des groupements alkyle ayant 1-6 atomes de C,
où un ou plusieurs parmi les substituants R^{o*} peuvent être partiellement substitués par des halogènes ou par -OR"', -CN ou -N(R"')₂;
où les cations guanidinium sont représentés par la formule générale (8)
[C(NR⁸R⁹)(NR¹⁰R¹¹)(NR¹²R¹³)]⁺ (8),
dans laquelle
R⁸ à R¹³ désignent chacun, indépendamment les uns des autres,
- H, NR^{1*}₂,
- alkyle à chaîne linéaire ou ramifiée ayant 1 à 20 atomes de C,
- alcényle à chaîne linéaire ou ramifiée ayant 2-20 atomes de C et une ou plusieurs doubles liaisons,
- alcynyle à chaîne linéaire ou ramifiée ayant 2-20 atomes de C et une ou plusieurs triples liaisons,
- cycloalkyle saturé, partiellement ou totalement insaturé ayant 3-7 atomes de C, pouvant être substitué par des groupements alkyle ayant 1-6 atomes de C,
où un ou plusieurs parmi les substituants R⁸ à R¹³ peuvent être partiellement substitués par des halogènes ou par -OR¹, -CN, -C(O)NR¹₂, -SO₂NR¹₂,
et où un ou deux atomes de carbone non adjacents qui ne sont pas en position α par rapport à de R⁸ à R¹³ peuvent être remplacés par des atomes et/ou des groupes d'atomes choisis dans le groupe constitué par -O-, -S-, -S(O)-, -SO₂-, -N⁺R¹₂-, -C(O)NR¹-, -SO₂NR¹- ou -P(O)R¹-;
où les cations hétérocycliques sont représentés par la formule générale (9)
[HétN]⁺ (9),
dans laquelle [HétN]⁺ est un cation hétérocyclique choisi dans le groupe constitué par 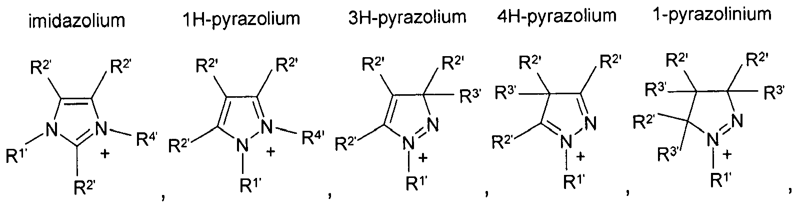 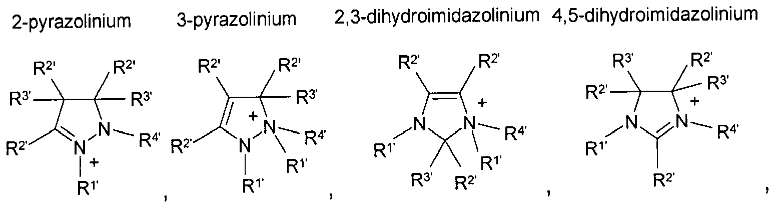 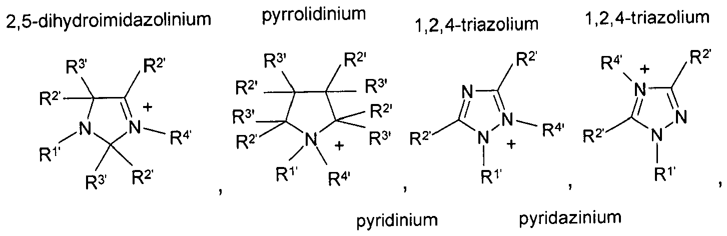 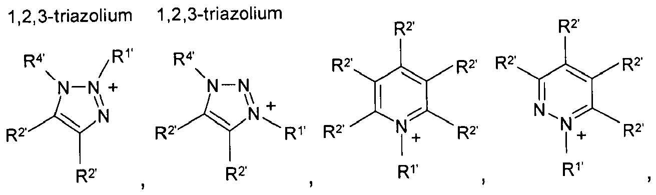 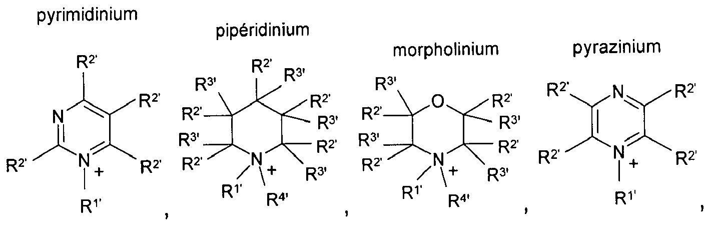 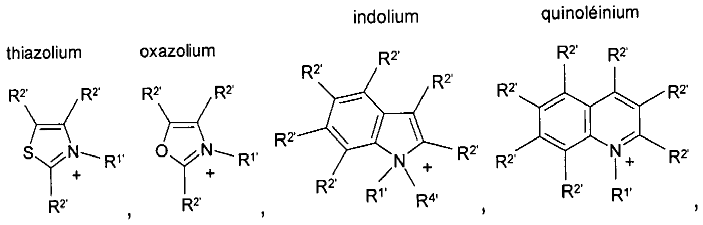 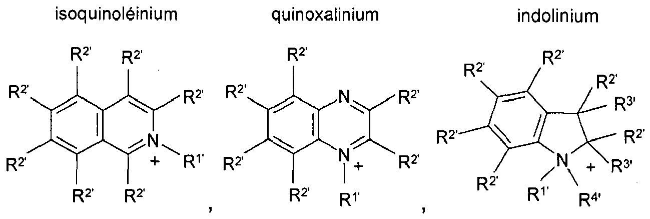 et 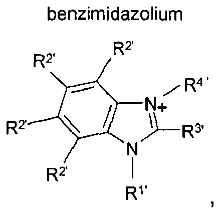 où les substituants R^{1'} à R^{4'} désignent chacun, indépendamment les uns des autres,
- H,
- alkyle à chaîne linéaire ou ramifiée ayant 1-20 atomes de C,
- alcényle à chaîne linéaire ou ramifiée ayant 2-20 atomes de C et une ou plusieurs doubles liaisons,
- alcynyle à chaîne linéaire ou ramifiée ayant 2-20 atomes de C et une ou plusieurs triples liaisons,
- cycloalkyle saturé, partiellement ou totalement insaturé ayant 3-7 atomes de C, pouvant être substitué par des groupements alkyle ayant 1-6 atomes de C,
- hétéroaryle, hétéroaryl-C₁-C₆-alkyle ou aryl-C₁-C₆-alkyle saturé, partiellement ou totalement insaturé,
où les substituants R^{1'}, R^{2'}, R^{3'} et/ou R^{4'} peuvent former ensemble un noyau,
où un ou plusieurs substituants R^{1'} à R^{4'} peuvent être partiellement ou totalement substitués par des halogènes ou partiellement substitués par -OR¹, -CN, -C(O)NR¹₂, -SO₂NR¹₂, mais où R^{1'} et R^{4'} ne peuvent pas être simultanément totalement substitués par des halogènes, et où un ou deux atomes de carbone non adjacents qui ne sont pas liés à l'hétéroatome des substituants R^{1'} à R^{4'} peuvent être remplacés par des atomes et/ou des groupes d'atomes choisis dans le groupe constitué par -O-, -S-, -S(O)-, -SO₂-, -N⁺R¹₂-, -C(O)NR¹-, -SO₂NR¹- ou -P(O)R¹-;
où les cations iminium sont représentés par la formule générale (10)
[R¹⁴₂N=CHR¹⁵]⁺ (10),
dans laquelle
R¹⁴ et R¹⁵ désignent à chaque occurrence, indépendamment l'un de l'autre,
- H, où un maximum d'un substituant R¹⁴ peut être H,
- alkyle à chaîne linéaire ou ramifiée ayant 1-20 atomes de C,
- alcényle à chaîne linéaire ou ramifiée ayant 2-20 atomes de C et une ou plusieurs doubles liaisons,
- alcynyle à chaîne linéaire ou ramifiée ayant 2-20 atomes de C et une ou plusieurs triples liaisons,
- cycloalkyle saturé, partiellement ou totalement insaturé ayant 3-7 atomes de C, pouvant être substitué par des groupements alkyle ayant 1-6 atomes de C,
où R¹⁵ peut également représenter Cl ou F,
où R¹⁵ peut être totalement substitué par fluor et/ou un ou plusieurs R¹⁴ et/ou R¹⁵ peuvent être partiellement substitués par des halogènes ou partiellement substitués par -OR^{1*}, -NR^{1*}₂, -CN, -C(O)NR^{1*}₂ ou -SO₂NR¹*₂,
et où un ou deux atomes de carbone non adjacents qui ne sont pas en position α par rapport au radical R¹⁴ et/ou R¹⁵ peuvent être remplacés par des atomes et/ou des groupes d'atomes choisis dans le groupe constitué par -O-, -S-, -S(O)-, -SO₂-, -N⁺R^{1*}₂-, -C(O)NR^{1*}-, -SO₂NR^{1*}- ou -P(O)R^{1*}-;
où R¹ représente H, C₁- à C₆-alkyle, C₃- à C₇-cycloalkyle non ou partiellement fluoré, phényle non substitué ou substitué, R^{1*} représente C₁-à C₆-alkyle, C₃- à C₇-cycloalkyle non ou partiellement fluoré, phényle non substitué ou substitué, et R'" représente C₁-C₈-alkyle à chaîne linéaire ou ramifiée.

9. Procédé selon l'une ou plusieurs parmi les revendications 1 à 8, **caractérisé en ce que** la réaction dans la première étape est effectuée à de -80 à 50°C.

10. Utilisation d'un composé de formule (1) selon la revendication 1, dans lequel [Kt]^{x+} est un cation inorganique, pour la préparation d'un composé de formule (1) selon la revendication 1 dans laquelle [Kt]^{x+} est un cation organique.

11. Utilisation d'un composé de formule (1) selon la revendication 1 dans laquelle [Kt]^{x+} est un cation organique comme solvant ou additif de solvant, comme catalyseur de transfert de phase, comme milieu d'échange thermique, comme substance tensioactive, comme plastifiant, comme agent ignifuge, comme sel conducteur ou comme agent d'extraction dans des procédés de séparation de substances.

12. Utilisation d'un composé de formule (1) selon la revendication 1 dans laquelle [Kt]^{x+} est un cation organique, dans les applications électrochimiques, les batteries, les capteurs, les condensateurs, les cellules solaires et les cellules à pigment photosensible.

13. Composé de formule (1)
[Kt]^{x+} [(CₙF₂ₙ₊₁)_{z}PF_{5-z}H]⁻ₓ (1)
dans laquelle [Kt]^{x+} est un cation inorganique ou organique,
où n = 1-8, x = 1-4 et z = 1-4,
où les composés [(CF₃)₂PF₃H]⁻ K⁺, [(CF₃)₂PF₃H]⁻ [(CH₃)₂NH₂]⁺, [(CF₃)PF₄H]⁻ K⁺ et [(CF₃)PF₄H]⁻ [(CH₃)₂NH₂]⁺ sont exclus.

14. Composé selon la revendication 13, **caractérisé en ce que** [Kt]^{x+} est un cation métallique.

15. Composé selon la revendication 13, **caractérisé en ce que** [Kt]^{x+} est un cation organique.

16. Procédé d'isolement de composés hydrophobes, **caractérisé en ce qu'**un composé de formule (1) selon la revendication 1 dans laquelle [Kt]^{x+} représente un cation organique est converti en un composé contenant un anion [(CₙF₂ₙ₊₁)₂P(O)O]⁻ ou [(CₙF₂ₙ₊₁)P(O)O₂]⁻² par hydrolyse.
